# EUROPÄISCHE PATENTSCHRIFT

(11) **EP 3 730 842 B1**
(45) Veröffentlichungstag und Bekanntmachung des Hinweises auf die Patenterteilung: **02.03.2022**
(21) Anmeldenummer: 20168383.6
(22) Anmeldetag: 07.04.2020
(51) Int. Cl.: F24C 15/16, A47L 15/50, A47J 27/04

(54) **HAUSHALTSGERÄT ODER GEWERBEGERÄT MIT TRAGSYSTEM**
HOUSEHOLD OR COMMERCIAL DEVICE WITH SUPPORT SYSTEM
APPAREIL ÉLECTROMÉNAGER OU APPAREIL INDUSTRIEL AVEC SYSTÈME DE SUPPORT

(30) Priorität: 24.04.2019 DE 102019110605; 12.06.2019 DE 102019115976; 14.06.2019 DE 102019116189
(43) Veröffentlichungstag der Anmeldung: 28.10.2020
(60) Teilanmeldung: 21188129.7
(73) Patentinhaber: Miele & Cie. KG, 33332 Gütersloh (DE)
(72) Erfinder: Peter, Sarah, 46286 Dorsten (DE)

(56) Entgegenhaltungen:
- WO-A1-02/33325
- WO-A1-2014/056764
- DE-A1- 19 951 267
- DE-A1-102008 035 078
- FR-A1- 2 608 905

## Beschreibung

Die Erfindung betrifft ein Haushaltsgerät oder Gewerbegerät zum Reinigen, Lagern oder Garen von Gegenständen, umfassend ein von Wandungen gebildetes Gehäuse, mittels dessen ein Innenraum räumlich eingefasst ist, sowie mindestens eine aus dem Innenraum entnehmbare Trageinrichtung, wobei die Trageinrichtung mindestens ein Schienensystem mit mindestens zwei miteinander verbundenen, relativ zueinander beweglichen Schienen sowie mindestens ein Tragelement umfasst, wobei das Schienensystem bei Vorliegen der Trageinrichtung in einem Einbauzustand derart in Kraft übertragender Weise an dem Gehäuse gelagert ist, dass das Tragelement mittels Ausziehens des Schienensystems relativ zu dem Gehäuse bewegbar ist, wobei eine an der Trageinrichtung angeordnete Verriegelungseinheit, die mindestens ein Verriegelungselement umfasst, zwischen einem Blockierzustand und einem Freizustand überführbar ist, wobei die Verriegelungseinheit bei Vorliegen der Trageinrichtung in deren Ausbauzustand, in dem die Trageinrichtung körperlich von dem Gehäuse getrennt ist, in ihrem Blockierzustand vorliegt, bei dessen Vorliegen das Verriegelungselement unter Bildung eines Formschlusses das Ausziehen des Schienensystems blockiert, wobei die Verriegelungseinheit bei Vorliegen der Trageinrichtung in deren Einbauzustand in ihrem Freizustand vorliegt, bei dessen Vorliegen das Verriegelungselement das Ausziehen des Schienensystems freigibt, und wobei die Verriegelungseinheit zumindest ein zweites drehbar an der Trageinrichtung angeordnetes Verriegelungselement umfasst, wobei die Verriegelungselemente zumindest mittelbar verschiedenen Schienen des Schienensystems zugeordnet sind.

Das Haushaltsgerät bzw. das Gewerbegerät im Sinne der vorliegenden Anmeldung ist dazu geeignet, mindestens einen Gegenstand zu reinigen, zu lagern oder zu garen. Ein entsprechendes Haushaltsgerät kann insbesondere von einer Spülmaschine, einem Kühlschrank, einem Backofen oder einem Dampfgarer gebildet sein. Das Haushaltsgerät kann insbesondere in Form eines Haushaltseinbaugeräts ausgeführt sein. Das Gewerbegerät kann insbesondere von einem professionellen Kühlschrank, einer professionellen Spülmaschine, einem professionellen Backofen oder einem professionellen Konvektomat gebildet sein, die beispielsweise für den Einsatz in Großküchen oder der Gastronomie vorgesehen sind.

Das Haushaltsgerät bzw. das Gewerbegerät umfasst ein von Wandungen gebildetes Gehäuse, mittels dessen ein Innenraum räumlich eingefasst ist. Am Beispiel eines Backofens ist der Innenraum von einem Garraum gebildet. Das Gehäuse kann ein tragendes Gehäuse sein, aber auch durch die Wandungen gebildet werden, die den Innenraum einfassen. Ferner umfasst das jeweilige Gerät eine aus dem Gehäuse entnehmbareTrageinrichtung. Letztere umfasst ihrerseits mindestens ein Schienensystem sowie mindestens ein Tragelement. Das Schienensystem weist mindestens zwei miteinander verbundene, relativ zueinander bewegliche Schienen auf. Insbesondere kann es von einem Teleskopauszug gebildet sein. Das Tragelement wirkt mit einer der Schienen des Schienensystems zusammen. Es dient dazu, mindestens einen Gegenstand aufzunehmen. Beispielsweise kann das Tragelement bei einem als Kühlschrank ausgebildeten Gerät von einem Einlegeboden, bei einem beispielsweise als Backofen ausgebildeten Gerät von einem Rost oder Backblech und bei einem Geschirrspüler von einem Spülkorb gebildet sein. Die Trageinrichtung ist auf diese Weise dazu hergerichtet, das Tragelement aus dem Innenraum heraus und damit relativ zu dem Gehäuse zu bewegen, ohne die Trageinrichtung als solche aus dem Gehäuse entnehmen zu müssen. Somit ist das Schienensystem bei Vorliegen der Trageinrichtung in einem Einbauzustand in Kraft übertragender Weise an dem Gehäuse gelagert. Hierbei ist es vor allem bei größeren Geräten, deren Innenraum eine lichte Breite zwischen den sich einander gegenüberliegenden Wandungen von beispielsweise 90 cm aufweisen, üblich, das jeweilige Tragelement fest mit dem ihm zugeordneten Schienensystem, vorzugsweise an der Schiene, die am weitesten aus dem Innenraum herausziehbar ist, verbunden ist und folglich bei einer Entnahme des Tragelements die Trageinrichtung als Ganzes aus dem Gerät entnommen wird. Die Entnehmbarkeit einer jeweiligen Trageinrichtung, das heißt deren Überführung von ihrem Einbauzustand in einen Ausbauzustand, dient insbesondere dazu, die Trageinrichtung als Ganzes außerhalb des jeweiligen Geräts reinigen zu können. Hierbei hat es sich als problematisch herausgestellt, dass die Schienen des Schienensystems auch dann eine Relativbewegung zueinander ausführen können, wenn die Trageinrichtung in ihrem Ausbauzustand vorliegt, in dem sie körperlich von dem Gehäuse getrennt ist. Dies kann in der Praxis zu einer ungewollten Bewegung des Schienensystems führen. Dabei kann beispielsweise bei einem als Backofen ausgebildeten Haushaltsgerät eine Gefahr vorliegen, sofern die Trageinrichtung im unmittelbaren Anschluss an einen Garvorgang entnommen wird und eine erhöhte Temperatur aufweist.

Aus dem Stand der Technik (DE 199 51 267 A1 A1 oder WO 02/033 325 A1) bekannte Geräte besitzen deshalb eine Verriegelungseinheit, die an der Trageinrichtung angeordnet ist und mindestens ein Verriegelungselement umfasst. Die Verriegelungseinheit ist zwischen einem Blockierzustand und einem Freizustand überführbar, wobei der Blockierzustand der Verriegelungseinheit mit dem Ausbauzustand der Trageinrichtung korrespondiert. In diesem Blockierzustand der Verriegelungseinheit ist das Ausziehen des Schienensystems, das heißt die Relativbewegung der mindestens zwei Schienen des Schienensystems zueinander, blockiert, im bekannten Stand der Technik unter Bildung eines Formschlusses des Verriegelungselements mit einem Formschlusspartner. Mit anderen Worten ist es bei Vorliegen der Verriegelungseinheit in ihrem Blockierzustand nicht möglich, die Schienen des Schienensystems relativ zueinander zu bewegen. Die Verriegelungseinheit ist ferner derart ausgebildet, dass sie bei Vorliegen der Trageinrichtung in deren Einbauzustand in einem Freizustand vorliegt. In diesem Freizustand entfaltet die Verriegelungseinheit keine Blockierwirkung für die Trageinrichtung. Das heißt, dass bei Vorliegen der Verriegelungseinheit in ihrem Freizustand das Ausziehen des Schienensystems freigegeben ist. Ebendies soll bei Vorliegen der Trageinrichtung in ihrem Einbauzustand möglich sein, damit der Ausziehmechanismus des Schienensystems wie gewünscht eingesetzt werden kann. Dadurch unterbindet die Verriegelungseinheit bei Vorliegen der Trageinrichtung in ihrem Ausbauzustand das unbeabsichtigte Ausziehen des Schienensystems. Die bekannten Geräte sind so gestaltet, dass das Verriegelungselement im Zuge der Überführung der Trageinrichtung von ihrem Einbauzustand in ihrem Ausbauzustand automatisch von seiner Freistellung in seine Blockierstellung überführbar ist, zumindest dann wenn beim Ausbauen der Trageinrichtung das Schienensystem bereits vollständig eingefahren war. Hierzu ist das Verriegelungselement derart ausgebildet, dass eine Wirkungslinie der infolge Eigengewichts des Verriegelungselements auf selbiges wirkenden Gewichtskraft unter einem Hebelarm bezogen auf die Drehachse des Verriegelungselements verläuft, sodass das Verriegelungselement allein aufgrund der auf es einwirkenden Gewichtskraft ausgehend von seiner Freistellung in Richtung einer Blockierstellung überführbar ist. Für diese Überführung bedarf es folglich lediglich einer freien Drehbarkeit des Verriegelungselements relativ zu der Trageinrichtung, sodass diese selbsttätig in ihre Blockierstellung dreht. Bei dieser Ausgestaltung ist mithin sichergestellt, dass die Trageinrichtung im Zuge ihres Ausbaus aus dem jeweiligen Haushaltsgerät oder Gewerbegerät "automatisch" gesichert wird, indem das Verriegelungselement in seine Blockierstellung überführt und mithin die Verriegelungseinheit in ihren Blockierzustand versetzt werden. Die Schienen des Schienensystems sind daraufhin derart blockiert, dass sie nicht in unbeabsichtigter Weise relativ zueinander bewegt werden können. Einer gesonderten Handlung eines Nutzers des Haushaltsgeräts oder Gewerbegeräts für diese Sicherung des Schienensystems bedarf es folglich nicht. Die automatische Überführung des Verriegelungselements von seiner Freistellung in seine Blockierstellung erfolgt infolge eines Wegfallens eines Anschlags des Verriegelungselements, das sich im Zuge des Ausbaus der Trageinrichtung aus dem jeweiligen Gerät ergibt. Das bekannte Verriegelungselement ist drehbar ausgebildet, wobei es unter Ausbildung einer Drehachse an der Trageinrichtung gelagert ist. Auf diese Weise kann das Verriegelungselement zwischen einer Blockierstellung und einer Freistellung überführt werden, wobei die Blockierstellung des Verriegelungselements mit dem Blockierzustand der Verriegelungseinheit und umgekehrt die Freistellung des Verriegelungselements dem Freizustand der Verriegelungseinheit korrespondieren. Mit anderen Worten greift das Verriegelungselement bei Vorliegen in dessen Blockierstellung formschlüssig mit einem jeweiligen Formschlusspartner ein und verhindert auf diese Weise die Relativbewegung der Schienen des Schienensystems zueinander.

Bei den bekannten Geräten liegen die Verriegelungselemente nur in einer Blockierstellung vor, wenn die in ihrem Ausbauzustand befindliche Trageinrichtung in einer Nutzungsausrichtung vorliegt, in der das Tragelement zur Aufnahme eines Gegenstands vorgesehen ist. Insbesondere kann das Tragelement bei Vorliegen der Trageinrichtung in ihrer Nutzungsausrichtung horizontal orientiert sein, wie es für ein Backblech, einen Einlegeboden oder einen Rost üblich ist. Da die bekannten Verriegelungseinrichtungen aufgrund der Schwerkraft wirken, verriegeln sie nicht, wenn die Trageinrichtung gegenüber der Nutzungsausrichtung um 180° in eine Umkehrausrichtung gedreht ist, das heißt gewissermaßen "auf dem Kopf steht". Das Drehen der Trageinrichtung in diese Position ist beispielsweise bei ihrer Reinigung durch den Benutzer durchaus nicht unüblich, so dass es bereits bei der Überführung in die Position zu einem ungewollten Lösen der Blockierstellung und dann bei einem darauffolgenden Kippen desr Trageinrichtung zu einem Ausfahren der Schienen kommen kann. Dabei sind Verletzungen des Benutzers oder Zerstörungen von Gegenständen, die sich im Fahrweg der Schienen befinden, möglich.

Aus der WO 2014/056 764 A1 ist eine Auszugsführung für Haushaltgeräte oder Möbel mit mindestens drei zueinander verfahrbar gelagerten Schienen bekannt. Es ist ein Rastmechanismus vorhanden, um die erste Schiene in einer vorbestimmten Position zu einer zweiten Schiene zu verrasten. Außerdem gibt es einen Sperrmechanismus, um die zweite Schiene gegenüber einer dritten in der Bewegung zu sperren.

Die DE 10 2008 064 850 A1 offenbart eine Teleskop-Auszugsführung mit ebenfalls drei zueinander verfahrbar gelagerten Schienen. An der mittleren Laufschiene ist ein Sperrhebel um eine Achse drehbar gelagert, die beiden äußeren Schienen besitzen Anschlagflächen für einen inneren und einen äußeren Anschlagkörper. Bei Erreichen einer vorgegebenen Auszugsstellung schwenkt der Sperrhebel in eine Sperrstellung.

Auch ein aus der FR 2 608 905 A1 bekannter Teleskopauszug besitzt drei Laufschienen und eine Verriegelungseinrichtung, um die Auszugsbewegung der Schienen zu blockieren. Die Verriegelung erfolgt mit einem Schwenkhebel an der mittleren Schiene, dessen hakenförmige Enden mit den äußeren Schienen in Eingriff bringbar sind.

Der vorliegenden Anmeldung liegt die Aufgabe zugrunde, ein Haushaltsgerät oder Gewerbegerät zur Verfügung zu stellen, dessen Betriebssicherheit gegenüber dem Stand der Technik dadurch verbessert ist, dass das Schienensystem unabhängig von der Ausrichtung der Trageinrichtung im Raum gegen unbeabsichtigtes Ausziehen blockiert ist.

Die zugrundeliegende Aufgabe wird erfindungsgemäß durch Haushaltsgeräte oder Gewerbegeräts mit den Merkmalen des unabhängigen Anspruchs 1 gelöst. Vorteilhafte Ausgestaltungen ergeben sich aus den nachfolgenden abhängigen Ansprüchen.

Die erfindungsgemäßen Vorteile bei einem eingangs genannten Gerät werden dadurch erreicht, dass die Verriegelungseinheit zumindest ein zweites drehbar an der Trageinrichtung angeordnetes Verriegelungselement umfasst, wobei die Verriegelungselemente zumindest mittelbar verschiedenen Schienen des Schienensystems zugeordnet sind. Insbesondere können die Verriegelungselemente derart ausgebildet sein, dass sie formschlüssig miteinander eingreifen können, sodass sie bei Ausbildung eines Formschlusses in einer Blockierstellung und bei Auflösung des Formschlusses in einer Freistellung vorliegen. Dabei ist der Blockierzustand der Verriegelungseinheit mittels einer Mehrzahl von Blockierstellungen der Verriegelungselemente erreichbar. In den verschiedenen Blockierstellungen liegt jeweils mindestens eines der Verriegelungselemente, vorzugsweise beide Verriegelungselemente, in jeweils unterschiedlichen Stellungen relativ zu der Trageinrichtung vor. Mit anderen Worten ist mindestens eines der Verriegelungselemente in den einzelnen Blockierstellungen jeweils unterschiedlich relativ zu der Trageinrichtung verdreht. Hierbei ist es insbesondere denkbar, dass die Verriegelungselemente infolge der auf sie wirkenden Gewichtskraft infolge Eigengewichts in Abhängigkeit einer Ausrichtung der in ihrem Ausbauzustand vorliegenden Trageinrichtung in verschiedenen Stellungen relativ zu der Trageinrichtung vorliegen. Aufgrund der grundsätzlich zu bevorzugende freien Verdrehbarkeit der Verriegelungselemente relativ zu der Trageinrichtung sind diese der auf sie wirkenden Gewichtskraft ausgesetzt, sodass sie ihre Stellungen relativ zu der Trageinrichtung infolge einer Ausrichtung der letzteren im Raum verändern. In besonders bevorzugter Weise wirken die Verriegelungselemente dabei unabhängig von der Ausrichtung der Trageinrichtung im Raum formschlüssig zusammen, sodass die Verriegelungseinheit in jedem Fall bei Vorliegen der Trageinrichtung in ihrem Ausbauzustand in ihrem Blockierzustand vorliegt. Die Verriegelungselemente nehmen dabei verschiedene Stellungen relativ zu der Trageinrichtung ein, die mithin die Mehrzahl der Blockierstellungen darstellen. Es wird so erreicht, dass die Verriegelungselemente bei Vorliegen der in ihrem Ausbauzustand befindlichen Trageinrichtung in einer Nutzungsausrichtung, in der das Tragelement zur Aufnahme eines Gegenstands vorgesehen ist, gemeinsam in einer ersten Blockierstellung und bei Vorliegen der in ihrem Ausbauzustand befindlichen Trageinrichtung in einer Umkehrausrichtung, in der die Trageinrichtung gegenüber der Nutzungsausrichtung um 180° gedreht ist, in einer zweiten Blockierstellung vorliegen, sodass die Verriegelungseinheit bei Vorliegen der Trageinrichtung sowohl in deren Nutzungsausrichtung als auch in deren Umkehrausrichtung jeweils in ihrem Blockierzustand vorliegt. Eine Veränderung der Ausrichtung der Trageinrichtung von der Nutzungsausrichtung hin zu der Umkehrausrichtung kann beispielsweise im Zuge einer Reinigung der Trageinrichtung erfolgen. Durch die beschriebene Weiterbildung des erfindungsgemäßen Haushaltsgeräts oder Gewerbegeräts wird sichergestellt, dass auch in diesem Szenario das unbeabsichtigte Ausziehen des Schienensystems blockiert ist.

Sofern die Verriegelungselemente der Verriegelungseinheit jeweils um eine Drehachse verdrehbar an der Trageinrichtung angeordnet sind, kann es besonders von Vorteil sein, wenn die Drehachsen der Verriegelungselemente parallel zueinander orientiert sind. Auf diese Weise wird erreicht, dass Verdrehungen der Verriegelungselemente in Abhängigkeit einer Wirkungsrichtung der auf sie einwirkenden Gewichtskraft gleichartig erfolgen. Dies ist im Hinblick auf einen formschlüssigen Eingriff der Verriegelungselemente miteinander unabhängig von einer Ausrichtung der Trageinrichtung im Raum vorteilhaft.

Weiterhin ist eine solche Ausgestaltung besonders vorteilhaft, bei der das erste Verriegelungselement mittelbar oder unmittelbar an einer ersten Schiene des Schienensystems und das zweite Verriegelungselement mittelbar oder unmittelbar an einer zweiten Schiene des Schienensystems angeordnet sind. In besonders bevorzugter Form sind die Verriegelungselemente den beiden "äußeren Schienen" eines Schienensystems zugeordnet, sodass eine Verriegelung dieser Schienen miteinander eine Bewegung des Schienensystems insgesamt unterbinden kann. Etwaige mittlere Schienen des Schienensystems sind dabei aufgrund ihrer Anbindung an die äußeren Schienen automatisch mit erfasst.

In einer zweiten, nicht erfindungsgemäßen Ausführungsform werden die Vorteile bei einem eingangs genannten Gerät dadurch erreicht, dass die Verriegelungseinheit mindestens ein Langloch aufweist, entlang dessen das Verriegelungselement verschiebbar gelagert ist, sodass das Verriegelungselement zwischen mindestens einer Festposition und mindestens einer Drehposition überführbar ist, wobei das Verriegelungselement bei Vorliegen in seiner Festposition derart blockiert ist, dass eine Verdrehung des Verriegelungselements relativ zu der Trageinrichtung zumindest im Wesentlichen verhindert ist, und wobei das Verriegelungselement bei Vorliegen in seiner Drehposition relativ zu der Trageinrichtung verdrehbar ist.

Dabei wird unter der Verhinderung der Verdrehung des Verriegelungselements "zumindest im Wesentlichen" verstanden, dass das Verriegelungselement insbesondere nicht in seine Freistellung überführbar ist, in der das selbige das Ausziehen des Schienensystems freigibt. Ein gewisses Drehspiel kann gleichwohl trotzdem vorliegen und ist für den Erfolg der Erfindung unschädlich.

Das Gerät hat viele Vorteile. Insbesondere ermöglicht die Lagerung des Verriegelungselements entlang des Langlochs es, das Verriegelungselement translatorisch entlang des Langlochs zu bewegen und das Verriegelungselement hierdurch besonders einfach und schnell mittels Verschiebung zwischen seiner Festposition und Drehposition zu überführen. Dabei ist vorgesehen, dass das Verriegelungselement in seiner Drehposition mittels Drehung zwischen seiner Blockierstellung und seiner Freistellung überführbar ist, um das Ausziehen des Schienensystems zu blockieren oder freizugeben. Hierdurch kann auch die Verriegelungseinheit mittelbar zwischen ihrem Blockierzustand und ihrem Freizustand überführt werden. Bei Vorliegen in der Festposition ist ein solches Verdrehen hingegen nicht möglich, sodass das Ausziehen des Schienensystems blockiert ist und bleibt, wobei insbesondere ein unbeabsichtigtes Überführen des Verriegelungselements in seine Freistellung verhindert sein soll. Insbesondere kann das Verriegelungselement auch infolge der auf das selbige wirkenden Schwerkraft entlang des Langlochs bewegt werden, wodurch die Überführung ohne ein Eingreifen des Verwenders des Geräts, also "automatisch", erfolgen kann.

Die Ausgestaltung sieht deshalb vor, dass das Verriegelungselement zumindest bei Vorliegen der Trageinrichtung in deren Ausbauzustand, in einer Lage, in der die Trageinrichtung in einer Nutzungsausrichtung vorliegt, bei alleiniger Einwirkung der Schwerkraft entlang des Langlochs in einer Festposition gehalten ist. In der Nutzungsausrichtung der Trageinrichtung ist das Tragelement zur Aufnahme eines Gegenstands vorgesehen. Insbesondere kann das Tragelement bei Vorliegen der Trageinrichtung in ihrer Nutzungsausrichtung horizontal orientiert sein wie es für ein Backblech, einen Einlegeboden oder einen Rost üblich ist. Die Trageinrichtung liegt typischerweise insbesondere bei Vorliegen in ihrem Einbauzustand in ihrer Nutzungsausrichtung vor. Es ist jedoch auch vorstellbar, dass die Trageinrichtung in ihrem Ausbauzustand in ihrer Nutzungsausrichtung vorliegt, insbesondere dann, wenn Gegenstände auf der Trageinrichtung angeordnet sind. In jedem Fall wird das Verriegelungselement gemäß der vorteilhaften Weiterbildung in vorteilhafter Weise allein infolge der auf das selbige wirkenden Schwerkraft in einer Festposition gehalten, wodurch ein zusätzliches Sichern des Schienensystems von dem Verwender des Geräts nicht benötigt wird. Vielmehr erfolgt die Sicherung somit "automatisch". Vorzugsweise ist das Verriegelungselement hierbei in einem Endbereich des Langlochs angeordnet.

Ferner sieht die Ausbildung des Geräts vor, dass die Verriegelungseinheit bei Vorliegen der Trageinrichtung auch in einer Umkehrausrichtung, in der die Trageinrichtung gegenüber der Nutzungsausrichtung um eine horizontale Drehachse um 180° gedreht ist, bei alleiniger Einwirkung der Schwerkraft entlang des Langlochs in einer weiteren Festposition gehalten ist. In ihrer Umkehrausrichtung steht die Trageinrichtung gewissermaßen "auf dem Kopf". Durch das Gerät wird sichergestellt, dass auch in diesem Szenario das unbeabsichtigte Ausfahren des Schienensystems blockiert ist. Hierbei ist es grundsätzlich problematisch, dass die Schwerkraft das Verriegelungselement in eine gegenüber der Nutzungsausrichtung entgegengesetzte Richtung zieht und das Verriegelungselement somit das Verlangen hat zu rotieren, was zur Folge haben würde, dass das Schienensystem freigegeben wird. Um das Ausfahren auch in der Umkehrausrichtung der Trageinrichtung zu verhindern, weist das Verriegelungselement des Geräts vorzugsweise mehrere Festpositionen auf, in denen eine Verdrehung des Verriegelungselements zumindest im Wesentlichen verhindert ist. Insbesondere ist das Verriegelungselement in der jeweiligen Festposition zumindest nicht in seine Freistellung überführbar. Ein Ausfahren des Schienensystems ist somit blockiert. Diese Funktionalität des Verriegelungselements wird mittels dessen beweglicher Lagerung entlang des Langlochs erzielt, wobei das Verriegelungselement hierbei allein infolge der auf das selbige wirkenden Schwerkraft in seiner zweiten Festposition gehalten wird. In der zweiten Festposition befindet sich das Verriegelungselement vorzugsweise in einem zweiten Endbereich des Langlochs, der dem ersten Endbereich des Langlochs gegenüberliegend angeordnet ist.

Dadurch blockiert die Verriegelungseinheit das Ausfahren des Schienensystems bei Vorliegen der Trageinrichtung in ihrem Ausbauzustand und zwar sowohl bei Vorliegen der Trageinrichtung in einer Nutzungsausrichtung als auch in einer Umkehrausrichtung. Vorzugsweise kann das Verriegelungselement weitere Festpositionen einnehmen, in denen eine Verdrehung des Verriegelungselements ebenfalls blockiert ist. Diese Festpositionen werden vorzugsweise immer dann eingenommen, wenn die Trageinrichtung nicht in ihrem Einbauzustand vorliegt. Hierdurch kann vorteilhafter Weise bewirkt werden, dass das Ausziehen des Schienensystems auch dann blockiert ist, wenn die Trageinrichtung in einer Ausrichtung angeordnet ist, die sich zwischen der Nutzungsausrichtung und der Umkehrausrichtung befindet, wenn die Trageinrichtung also "schräg" ausgerichtet ist.

Gemäß einer bevorzugten Weiterbildung des Geräts ist vorgesehen, dass das Langloch senkrecht bezogen auf die Tragebene, die das Tragelement mit seiner Oberfläche aufspannt, orientiert ist, wobei vorzugsweise das Langloch - bei Vorliegen der Trageinrichtung in ihrem Einbauzustand (und somit in ihrer Nutzungsausrichtung) - vertikal orientiert ist. Vorteilhafter Weise kann das Verriegelungselement somit im Zuge des "Umdrehens" der Trageinrichtung, das heißt im Zuge einer Überführung derselben zwischen ihrer Nutzungs- und ihrer Umkehrausrichtung, allein infolge der Wirkung der Schwerkraft in dem Langloch bewegt und somit zwischen seinen Festpositionen überführt werden. Vorzugsweise ist dabei vorgesehen, dass das Verriegelungselement in dem Einbauzustand, in dem sich die Trageinrichtung in ihrer Nutzungsausrichtung befindet, infolge der auf das Verriegelungselement wirkenden Schwerkraft in eine erste Festposition überführt wird. Mittels der vertikalen Ausrichtung des Langlochs kann in vorteilhafter Weise somit eine Überführung des Verriegelungselements zwischen den Festpositionen allein infolge der auf das Verriegelungselement wirkenden Schwerkraft bewirkt werden, wenn die Trageinrichtung beispielsweise im Zuge einer Reinigung in ihre Umkehrausrichtung oder in beliebige Zwischenausrichtungen verdreht wird. Eine Drehachse, um die die Trageinrichtung hierbei verdreht wird, ist dabei vorzugsweise parallel zu der Tragebene des Tragelements ausgerichtet. Infolge der Verdrehung "rutscht" das Verriegelungselement somit in dem Langloch in weitere Festpositionen. Vorzugsweise liegt das Verriegelungselement damit auch dann in einer Festposition vor, wenn die Trageinrichtung beispielsweise im Zuge der Reinigung "schräg" ausgerichtet ist und mithin in einer Zwischenausrichtung vorliegt.

Gemäß einem weiteren Merkmal ist vorgesehen, dass das Langloch entlang seiner Längsachse eine Aufweitung aufweist, in deren Wirkungsbereich eine Breite des Langlochs größer ist als außerhalb der Aufweitung, wobei vorzugsweise die Drehposition des Verriegelungselements mit einer Positionierung des Verriegelungselements in dem Wirkungsbereich der Aufweitung korrespondiert. Um zu gewährleisten, dass das Verriegelungselement außerhalb der Aufweitung nicht verdrehbar und somit nicht in seine Freistellung überführbar ist, ist die Breite des Langlochs außerhalb der Aufweitung derart dimensioniert, dass eine Verdrehung des Verriegelungselements blockiert ist. Lediglich in dem Wirkungsbereich der Aufweitung ist eine Verdrehung ermöglicht, sodass das Verriegelungselement infolge der Überführung desselben von seiner Blockierstellung in seine Freistellung somit das Ausziehen des Schienensystems freigibt.

Eine vorteilhafte Ausgestaltung sieht vor, dass die Aufweitung in einem Mittelbereich des Langlochs angeordnet ist. Vorteilhafter Weise ist das Langloch symmetrisch, wodurch ein Verschiebungsweg des Verriegelungselements zwischen endseitigen Festpositionen und der mittigen Drehposition somit gleich groß ist. Vorteilhafter Weise ist das Verriegelungselement somit von den beiden endseitigen Festpositionen in dem Einbauzustand und in dem Ausbauzustand der Trageinrichtung gleich "schnell" in seine Drehposition überführbar.

Gemäß einem weiteren Merkmal ist vorgesehen, dass das Verriegelungselement mittels eines Teilbolzens in dem Langloch geführt ist, wobei vorzugsweise ein Querschnitt des Teilbolzens von einer Teilkreisfläche gebildet ist. Vorzugsweise ist dabei vorgesehen, dass der Teilbolzen einen halbkreisförmigen Querschnitt aufweist, dessen Durchmesser größer ist als die Breite des Langlochs außerhalb seiner Aufweitung, wobei der Radius des Querschnitts in etwa der Breite entspricht. Hierdurch wird eine Bewegung des Teilbolzens entlang des Langlochs bei geeigneter Ausrichtung des Teilbolzens ermöglicht, eine Verdrehung hingegen ist blockiert, da der Teilbolzen in dem Langloch einen Formschluss ausbilden kann, der ein Verdrehen des Verriegelungselements zumindest im Wesentlichen verhindert. Die Verdrehung des Verriegelungselements wird lediglich dann ermöglicht, wenn der Teilbolzen im Wirkungsbereich einer Aufweitung des Langlochs angeordnet ist. Hierbei ist die Aufweitung vorzugsweise einseitig an dem Langloch ausgebildet und weist eine halbkreisförmige Fläche auf, welche in etwa dem Querschnitt des Teilbolzens entspricht, sodass der Teilbolzen für den Fall, dass er in dem Wirkungsbereich der Aufweitung angeordnet ist, verdrehbar ist. Hierdurch wird eine Überführung des Verriegelungselements von seiner Blockierstellung in seine Freistellung ermöglicht. Dabei ist der Teilbolzen vorzugsweise derart in dem Langloch angeordnet, dass eine ebene Fläche des Teilbolzens parallel zu einer Seitenfläche des Langlochs verläuft, in der die Aufweitung angeordnet ist. Hierdurch kann der Teilbolzen bei einer Verdrehung desselben in die Aufweitung "eingedreht" werden.

Eine weiterhin vorzugsweise Ausgestaltung sieht vor, dass die Verriegelungseinheit eine Führungseinrichtung umfasst, mittels der das Verriegelungselement im Zuge der Überführung der Trageinrichtung in deren Einbauzustand entlang des Langlochs in ihre Drehposition führbar ist, vorzugsweise selbsttätig. Das Verriegelungselement kann somit unter Wirkung die Führungseinrichtung entlang des Langlochs bewegt werden. Eine solche Kopplung des Verriegelungselements mit der Führungseinrichtung ist insbesondere im Hinblick auf die Überführung des Verriegelungselements in seine Drehposition vorteilhaft, wobei die Führungseinrichtung vorzugsweise derart ausgebildet ist, dass das Einbauen der Trageinrichtung in das Gehäuse selbsttägig eine Betätigung der Führungseinrichtung und hierdurch bedingt die Überführung des Verriegelungselements in dessen Drehposition bewirkt. Dies kann insbesondere mittels eines Anschlags der Führungseinrichtung an einer Anschlagfläche des Gehäuses erfolgen, beispielsweise an einer in dem Gehäuse angeordneten Aufnahmeeinheit, die zur Aufnahme der Trageinrichtung dient.

Eine besonders bevorzugte Weiterentwicklung des erfindungsgemäßen Geräts sieht eine Aufnahmeeinheit vor, die in Kraft übertragender Weise an dem Gehäuse angeordnet ist und dazu geeignet ist, die Trageinrichtung aufzunehmen, wobei vorzugsweise die Trageinrichtung auf einer Auflagefläche der Aufnahmeeinheit ablegbar ist. Die Aufnahmeeinheit kann insbesondere von einer Mehrzahl stabförmiger Streben gebildet sein, die miteinander verbunden sind. Die Aufnahmeeinheit ist bei einem als Backofen ausgebildeten Gerät beispielsweise in Form von an den Seitenwandungen desselben, paarweise angeordneten Horizontalstreben gebildet, welche mittels Vertikalstreben verbunden sind. Die Aufnahmefläche wird hierbei vorzugsweise von jeweils einer Horizontalstrebe an jeder Seitenwandung gebildet. Dabei ist gemäß einer vorzugsweisen Weiterbildung vorgesehen, dass eine Führungseinrichtung der Verriegelungseinheit im Zuge der Überführung der Trageinrichtung in deren Einbauzustand an der Aufnahmeeinheit anschlagen kann, wodurch das, mit der Führungseinrichtung gekoppelte, Verriegelungselement entlang des Langlochs in seine Drehposition überführbar ist. Hierdurch wird sichergestellt, dass das Verriegelungselement ohne eine besondere Handlung des Verwenders, also "automatisch", von seiner Festposition in seine Drehposition überführbar ist. Dabei ist vorzugsweise vorgesehen, dass ein Teilbolzen des Verriegelungselements in Kraft übertragender Weise an der Führungseinrichtung angeordnet ist, sodass eine Bewegung der Führungseinrichtung im Zuge der Überführung der Trageinrichtung in deren Einbauzustand auf den Teilbolzen übertragen wird, wodurch dieser entlang des Langlochs bewegbar und insbesondere in einen Wirkungsbereich einer Aufweitung führbar ist, bei dessen Erreichen das Verriegelungselement in seiner Drehposition vorliegt.

Ferner ist es besonders vorteilhaft, wenn das Verriegelungselement mindestens einen Anschlagabschnitt umfasst, der derart über die Trageinrichtung hinaus vorsteht, dass das Verriegelungselement im Zuge der Überführung der Trageinrichtung in deren Einbauzustand mittelbar oder unmittelbar an dem Gehäuse anschlägt. Infolge des Anschlags des Anschlagabschnitts an dem Gehäuse wird das Verriegelungselement verdreht, sofern sich das Verriegelungselement in seiner Drehposition befindet. Dabei ist vorzugsweise vorgesehen, dass das Verriegelungselement im Zuge des Einbaus der Trageinrichtung in das Gehäuse zum einen mittels einer Führungseinrichtung entlang des Langlochs in seine Drehposition überführt wird, in der eine Verdrehung des Verriegelungselements relativ zu der Trageinrichtung ermöglicht ist. Zum anderen - und insbesondere danach - schlägt der Anschlagabschnitt des Verriegelungselements an dem Gehäuse an, sodass das Verriegelungselement verdreht und somit von seiner Blockierstellung in seine Freistellung überführt wird und hierbei das Ausfahren des Schienensystems freigibt. Das Anschlagen des Verriegelungselements kann insbesondere an einer Aufnahmeeinheit erfolgen, die in dem Gehäuse angeordnet ist.

Es ist gemäß einem weiteren Merkmal vorgesehen, dass das Verriegelungselement einen Hakenabschnitt aufweist, mittels dessen das Verriegelungselement bei Vorliegen der Verriegelungseinheit in deren Blockierzustand mittelbar oder unmittelbar formschlüssig mit dem Tragelement eingreift. Infolge des Formschlusses wird ein Ausziehen des Schienensystems blockiert. Vorzugsweise ist dabei vorgesehen, dass die Verriegelungseinheit mittelbar oder unmittelbar einer Schiene des Schienensystems, vorzugsweise einer Unterschiene, zugeordnet ist, während das Tragelement vorzugsweise ebenfalls mittelbar oder unmittelbar in Kraft übertragender Weise einer Schiene des Schienensystems zugeordnet ist, vorzugsweise jedoch einer Oberschiene. Mit anderen Worten ist das Verriegelungselement an einer anderen Schiene angeordnet als das Tragelement, sodass bei Vorliegen eines Formschlusses zwischen dem Verriegelungselement und dem Tragelement ein Ausfahren des Schienensystems somit blockiert ist.

In einer dritten, nicht erfindungsgemäßen Ausführungsform ist das Verriegelungselement im Zuge der Überführung der Trageinrichtung von ihrem Ausbauzustand in ihren Einbauzustand infolge eines mittelbaren oder unmittelbaren Anschlags an dem Gehäuse zumindest teilweise elastisch verformbar, wodurch das Verriegelungselement automatisch von seinem Blockierzustand in seinen Freizustand überführbar ist.

Das Haushaltsgerät oder Gewerbegerät hat viele Vorteile. Insbesondere erfolgt die Überführung des Verriegelungselements von seinem Blockierzustand in seinen Freizustand automatisch bei der Überführung der Trageinrichtung von ihrem Ausbauzustand in ihren Einbauzustand, also ohne unmittelbares Mitwirken des Verwenders des Haushaltsgeräts oder Gewerbegeräts. Diese Ausführung hat den Vorteil, dass der Verwender des Haushaltsgeräts oder Gewerbegeräts nicht selbst eingreifen muss, um den Freizustand des Verriegelungselements herbeizuführen, gleichwohl jedoch das Schienensystem bei Vorliegen der Trageinrichtung in ihrem Ausbauzustand gegen unbeabsichtigtes Ausziehen gesichert ist. Typischerweise wird die Trageinrichtung mittels eines Anschlags an dem Gehäuse in dem selbigen gehalten. Dadurch, dass das Verriegelungselement infolge des Anschlags verformbar ist, erfolgt die Überführung des Verriegelungselements von dem Blockierzustand in den Freizustand somit bei einer Handlung, die der Verwender ohnehin im Zuge der Verwendung der Trageinrichtung vornimmt, nämlich im Zuge des Einbaus der Trageinrichtung in das jeweilige Haushalts- oder Gewerbegerät.

Die Überführung des Verriegelungselements von seinem Blockierzustand in seinen Freizustand erfolgt durch die zumindest teilweise, elastische Verformbarkeit des Verriegelungselements. Es wird unter einer elastischen Verformbarkeit die Fähigkeit eines Körpers verstanden, nach dem Einwirken einer äußeren Kraft selbstständig in seine ursprüngliche Form zurückzukehren. Diese Ausführung hat den Vorteil, dass das Verriegelungselement beliebig oft - unbeachtlich gewisser Verschleißerscheinungen - von ihrem Blockierzustand in ihren Freizustand überführbar ist und hierbei selbstständig, also ohne unmittelbares Mitwirken des Verwenders, in den Blockierzustand zurückkehrt. Hierdurch ist die Sicherheit deutlich erhöht, da ein versehentliches Vergessen der Verriegelung des Schienensystems ausgeschlossen ist. Ein besonderer Vorteil der Ausführungsform des Haushaltsgeräts oder Gewerbegeräts besteht darin, dass das Verriegelungselement im Ausbauzustand der Trageinrichtung unabhängig davon wirkt, in welcher Position die Trageinrichtung gehalten wird, sei es in der Nutzungseinrichtung, d. h. wenn die Trageinrichtung so gehalten wird, dass sich das Tragelement oberhalb der Schienen befindet, wenn die Trageinrichtung gegenüber der Nutzungsausrichtung um 180° gedreht ist, das heißt gewissermaßen "auf dem Kopf steht".

Gemäß einer vorteilhaften Ausgestaltung ist vorgesehen, dass das Verriegelungselement allein infolge der aufgrund des Eigengewichts der Trageinrichtung auf das Verriegelungselement wirkenden Gewichtskraft das Verriegelungselement von seinem Blockierzustand in seinen Freizustand überführbar ist. Diese Ausführung hat den Vorteil, dass keine zusätzlichen Elemente zur Überführung des Verriegelungselements von seinem Blockierzustand in seinen Freizustand nötig sind. Ferner muss der Verwender des Haushaltsgeräts oder Gewerbegeräts nicht selbst eingreifen, um den Freizustand des Verriegelungselements herbeizuführen. Vorzugsweise ist das Verriegelungselement infolge der darauf wirkenden Gewichtskraft verformbar und hierdurch in seinen Freizustand überführbar. Dies kann beispielsweise dadurch umgesetzt werden, dass zumindest ein Halteabschnitt des Verriegelungselements an einer Unterseite der Trageinrichtung verläuft, sodass im Zuge eines Auflegens der Trageinrichtung auf eine Auflage unausweichlich der Halteabschnitt an einer Fläche der Auflage anschlägt und infolge des Eigengewichts der Trageinrichtung gewissermaßen zwischen der Auflage und der Trageinrichtung gequetscht und dabei elastisch nach oben gedrückt wird. Infolge dieses Nach-Oben-Drückens kann ein zumindest mittelbarer Formschluss des Verriegelungselements mit einer jeweiligen Schiene des Schienensystems gelöst und das Verriegelungselement mithin in seinen Freizustand überführt werden. Diese Verformung wird wieder rückgängig gemacht, sobald die Trageinrichtung von der Auflage abgehoben und somit in ihren Ausbauzustand überführt wird. Das Verriegelungselement wird sich daraufhin automatisch wieder zurück in seinen Blockierzustand bewegen. Eine entsprechende Ausgestaltung ist in dem nachstehenden Ausführungsbeispiel erläutert.

Eine vorzugsweise Ausgestaltung sieht vor, dass das Haushaltsgerät oder Gewerbegerät mindestens eine an dem Gehäuse, vorzugweise an einer Seitenwandung des Gehäuses, angeordnete Aufnahme umfasst, die vorzugsweise mindestens eine Auflagefläche zur Auflage der Trageinrichtung aufweist. Mittels der Aufnahme lässt sich die Trageinrichtung in dem Haushaltsgerät oder Gewerbegerät halten. In aller Regel sind die bekannten Haushaltsgeräte und Gewerbegeräte mit Aufnahmen ausgestattet, die mehrere, in einem Abstand zueinander angeordneten Aufnahmebereiche aufweisen, sodass die Trageinrichtung in verschiedenen Abständen zu einer unteren Bodenfläche des Gehäuses angeordnet werden kann. Die Aufnahme eines Haushaltsgeräts oder Gewerbegeräts kann hierbei beispielsweise bei einem als Backofen ausgebildeten Haushaltsgerät oder Gewerbegerät von typischerweise im Innenraum angeordneten Führungsstangen zur Aufnahme eines Backblechs gebildet sein, wobei die unteren Führungsstange der Aufnahmen an beiden Seitenwandungen eine Auflagefläche zur Auflage der Trageinrichtung ausbildet. Die zugehörige obere Führungsstange dient hingegen zur Absicherung der Trageinrichtung für den Fall, dass die Trageinrichtung infolge einer asymmetrischen Platzierung von Gegenständen auf der Trageinrichtung zu "kippen" droht. Eine derartige Aufnahme ermöglicht eine besonders einfache Befestigung der Trageinrichtung an dem Gehäuse, wobei die Aufnahme hierbei vorzugsweise den Anschlag zur Überführung der Verriegelungseinheit von ihrem Freizustand in seinen Blockierzustand ausbildet.

Eine vorteilhafte Ausgestaltung sieht vor, dass das Verriegelungselement im Zuge der Überführung der Trageinrichtung in deren Einbauzustand mittels der Auflage der Trageinrichtung auf die Auflagefläche der Aufnahme elastisch verformbar und hierdurch die Verriegelungseinheit von ihrem Blockierzustand in ihren Freizustand überführbar ist.

In vorteilhafter Weise unterscheidet sich der Einlegevorgang der Trageinrichtung in das Haushaltsgerät oder Gewerbegerät für den Verwender somit nicht gegenüber dem Stand der Technik. Hierdurch muss der Verwender keine zusätzlichen Handlungen vornehmen, um die Verriegelungseinheit in ihren Freizustand zu überführen. Dabei ist vorzugsweise vorgesehen, dass die Überführung der Verriegelungseinheit von ihrem Blockierzustand in ihren Freizustand mittels der aufgrund des Eigengewichts der Trageinrichtung auf das Verriegelungselement wirkenden Gewichtskraft erfolgt, sobald die Trageinrichtung auf der Auflagefläche der Aufnahme aufliegt.

Eine besonders vorteilhafte Weiterentwicklung des Haushaltsgeräts oder Gewerbegeräts sieht vor, dass die Verriegelungseinheit im Zuge der Überführung der Trageinrichtung in deren Ausbauzustand und des damit einhergehenden Wegfalls des Anschlags des Verriegelungselements an dem Gehäuse aufgrund einer infolge der elastischen Verformung in dem Verriegelungselement gespeicherten Rückstellkraft automatisch von ihrem Freizustand in ihren Blockierzustand überführbar ist. In vorteilhafter Weise erfolgt also auch die Überführung der Verriegelungseinheit von ihrem Freizustand in ihren Blockierzustand automatisch und ohne einen Eingriff des Verwenders des Haushaltsgeräts oder Gewerbegeräts. Dies führt dazu, dass der Verwender keine weiteren Handlungen vornehmen muss, um die Verriegelungseinheit von ihrem Freizustand in ihren Blockierzustand zu überführen. Im Hinblick auf die Handhabung von beispielsweise erwärmten Aufnahmeelementen kann eine derartige Ausführung besonders vorteilhaft sein, da der Verwender hierdurch zumindest nicht unmittelbar an der Überführung beteiligt ist und die mittels des Backofens erwärmten Gegenstände, insbesondere Lebensmittel, sicher aus dem Backofen entnehmen kann, ohne Gefahr zu laufen, durch das Auseinanderlaufen der Schienen behindert zu werden.

Es ist gemäß einer vorzugsweisen Ausgestaltung vorgesehen, dass das Verriegelungselement einen Befestigungsabschnitt und einen Halteabschnitt aufweist, wobei der Halteabschnitt in dem Blockierzustand des Verriegelungselements zumindest einen Teil des Tragelements formschlüssig umgreift. Der Befestigungsabschnitt dient hierbei zur Befestigung des Verriegelungselements an der Trageinrichtung, während der Halteabschnitt das Schienensystem vor einem unbeabsichtigten Ausziehen desselben sichert. Dabei bildet der Halteabschnitt des Verriegelungselements vorzugsweise einen Formschluss mit einem Formschlusspartner. Hierbei ist vorstellbar, dass das Verriegelungselement als Federelement ausgebildet und zumindest mittelbar einer der Schienen des Schienensystems zugeordnet ist. Dabei ist das Verriegelungselement vorzugsweise derart geformt, dass der Befestigungsabschnitt zur Befestigung des Verriegelungselements an der Trageinrichtung vorgesehen ist, vorzugsweise an einer unteren Schiene des Schienensystems. Der Halteabschnitt ist vorzugsweise so geformt, dass ein formschlüssiges Umgreifen des Tragelements erfolgen kann, das einer anderen Schiene des Schienensystems zugeordnet ist, vorzugsweise einer oberen Schiene. Für den Fall, dass das Tragelement als ein Rost ausgebildet ist, ist vorzugsweise vorgesehen, dass der Halteabschnitt zumindest eine Stange des Rosts, welche den Formschlusspartner ausbildet, formschlüssig umgreift. Bei Vorliegen in seinem Blockierzustand verbindet das Verriegelungselement folglich die Schienen des Schienensystems in Kraft übertragender Weise, wodurch das unbeabsichtigte Ausziehen des Schienensystems wunschgemäß verhindert wird.

Die beschriebene Ausgestaltung ist dann zudem besonders von Vorteil, wenn ein Verformungsweg, den das Verriegelungselement in elastischer Weise im Zuge der Überführung der Trageinrichtung von ihrem Ausbauzustand in ihren Einbauzustand und umgekehrt ausführt, eine Eingrifftiefe des Verriegelungselements an dem Tragelement übersteigt. Diese Ausgestaltung stellt sicher, dass ein elastischer Bewegungsraum des Verriegelungselements dazu geeignet ist, das Tragelement - und mithin die ihm zugeordnete Schiene des Schienensystems - wechselweise zu blockieren und freizugeben.

Im Zuge der Überführung der Trageinrichtung von ihrem Ausbauzustand in ihren Einbauzustand wird vorzugsweise der Befestigungsabschnitt derart verformt, dass das Tragelement von dem Halteabschnitt freigegeben wird. Beispielsweise erfolgt die Freigabe dadurch, dass das Verriegelungselement infolge der darauf wirkenden Gewichtskraft der Trageinrichtung entgegen der Gewichtskraft auslenkbar ist, beispielsweise mittels einer Quetschung des Verriegelungselements zwischen der Trageinrichtung und einer Auflage. Dabei ist vorgesehen, dass der Auslenkungsweg derart dimensioniert ist, dass das Tragelement hierdurch freigegeben wird.

Gemäß einer vorzugsweisen Ausgestaltung ist das Verriegelungselement mittelbar oder unmittelbar an einer Schiene des Schienensystems angeordnet. Eine derartige Anordnung ermöglicht eine besonders einfache Befestigung des Verriegelungselements an der Trageinrichtung.

In einer vierten vorteilhaften Ausführungsform werden Vorteile bei einem eingangs genannten Gerät dadurch erreicht, dass das Verriegelungselement in dem Freizustand der Verriegelungseinheit gegen die Kraft einer Feder vorgespannt ist. Durch die Feder wird erreicht, dass das Verriegelungselement immer dann, wenn die Verriegelungseinheit sich nicht zwangsweise in ihrem Freizustand befindet, durch die Feder automatisch in eine Position bewegt wird, in der die Verriegelungseinheit sich in ihrem Blockierzustand befindet oder zumindest bringen lässt. Auch diese Ausführungsform des Haushaltsgeräts oder Gewerbegeräts ist so konstruiert, dass das Verriegelungselement im Ausbauzustand der Trageinrichtung unabhängig davon wirkt, in welcher Position die Trageinrichtung gehalten wird, sei es in der Nutzungseinrichtung, oder auch in einer Umkehrausrichtung, inder die Trageinrichtung gegenüber der Nutzungsausrichtung um 180° gedreht ist, das heißt gewissermaßen "auf dem Kopf steht".

Dabei ist es vorteilhaft, wenn das Verriegelungselement in dem in dem Einbauzustand der Trageinrichtung gegen die Kraft der Feder in einen Freizustand der Verriegelungseinheit gedrückt ist. So wird sichergestellt, dass sich das Verriegelungselement in dem Freizustand der Verriegelungseinheit, das heißt in dem Einbauzustand der Trageinrichtung, nicht lösen und die Verriegelungseinheit in einen Blockierzustand bringen kann. Es ist aber auch aus den bereits zuvor beschriebenen Gründen vorteilhaft, wenn das Verriegelungselement in dem Ausbauzustand der Trageinrichtung von der Feder in einen Blockierzustand der Verriegelungseinheit gedrückt wird. Durch automatische Überführung der Verriegelungseinheit in den Frei- bzw. Blockierzustand mittels der Feder ist ein Eingriff des Benutzers nicht erforderlich und eine Ver- bzw. Entriegelung der Schienen kann nicht vergessen werden.

Ein einfacher Aufbau Verriegelungseinheit ergibt sich dadurch, dass das Verriegelungselement einen drehbar gelagerten Haken umfasst. Dabei ist es dann insbesondere vorteilhaft, wenn der Haken an einem ersten Bauteil der Trageinrichtung angeordnet ist und zur Herstellung des Blockierzustands den Rand einer Öffnung in einem zweiten Bauteil der Trageinrichtung umgreift. Der Haken kann an einer ersten Schiene und die Öffnung an einer zweiten Schiene eines Schienensystems angeordnet sein. Dadurch ergibt sich ein kompakter Aufbau, der bei der Handhabung der Trageinrichtung nicht hinderlich ist. Dies wird umsomehr erreicht, wenn die erste Schiene und der Haken zu einer näherliegenden Seitenwandung des Gehäuses gerichtet sind.

Es ist besonders vorteilhaft, wenn der Drehweg des Hakens in mindestens einer Drehrichtung durch einen Anschlag begrenzt wird. Hierdurch kann sichergestellt werden, dass die Feder weder zu stark zusammengedrückt wird noch, dass sie sich soweit entspannt, dass sie aus der Verriegelungseinheit herausfallen kann.

Eine konstruktiv einfache Ausführung der Verriegelungseinheit wird auch noch dadurch erreicht, dass der Betätigungsarm von einem abgewinkelten Teilstück einer Aufnahmestange der Aufnahme bewegt wird und dadurch den Haken in seinen Freizustand dreht.

Alle zuvor beschriebenen Ausführungsformen besitzen gemeinsam den Vorteil, dass die Verriegelungseinheiten bzw. -elemente sich jeweils nur an den Trageinrichtungen befinden, so dass sich konstruktive Änderungen zum Erreichen der Vorteile auf die Trageinrichtung beschränken können. Somit können sogar bei bereits an den Kunden ausgelieferten Geräten Trageinrichtungen ohne Verriegelungseinrichtung gegen erfindungsgemäße Trageinrichtungen ausgetauscht werden.

Ein Ausführungsbeispiel der Erfindung ist in den Zeichnungen rein schematisch dargestellt und wird nachfolgend näher beschrieben. Es zeigt:
- Figur 1: eine Frontansicht eines Haushaltsgeräts gemäß dem Stand der Technik,
- Figur 2: eine perspektivische Ansicht einer Trageinrichtung in einem Einbauzustand mit ausgezogenem Schienensystem,
- Figur 3: die Trageinrichtung aus Figur 2 mit eingefahrenem Schienensystem in einem Ausbauzustand in einer Nutzungsausrichtung,
- Figur 4: die Trageinrichtung aus Figur 2 mit eingefahrenem Schienensystem in einem Ausbauzustand und in einer gegenüber der Nutzungsausrichtung um 180° gedrehten Umkehrausrichtung,
- Figur 5: ein schematisches Detail eines ersten Ausführungsbeispiels einer mit einer Verriegelungseinheit ausgestatteten Trageinrichtung, die auf einer Auflage aufliegt, wobei die Verriegelungseinheit in ihrem Freizustand vorliegt,
- Figur 6: das Detail gemäß Figur 5, jedoch aus einer anderen Perspektive,
- Figur 7: das Detail gemäß Figur 6, wobei Verriegelungselemente der Verriegelungseinheit jeweils in einer ersten Blockierstellung vorliegen,
- Figur 8: das Detail gemäß Figur 7, wobei die Verriegelungselemente jeweils in einer zweiten Blockierstellung vorliegen,
- Figur 9: eine Seitenansicht eines zweiten, nicht erfindungsgemäßen Ausführungsbeispiels einer erfindungsgemäßen Verriegelungseinheit mit einem Verriegelungselement in einer ersten Festposition,
- Figur 10: wie Figur 9, wobei das Verriegelungselement in einer zweiten Festposition vorliegt,
- Figur 11: die Verriegelungseinheit mit dem Verriegelungselement in Drehposition,
- Figur 12: eine perspektivische Ansicht des zweiten Ausführungsbeispiels einer erfindungsgemäßen Trageinrichtung sowie deren Verriegelungseinheit,
- Figur 13: einen vertikalen Schnitt durch das zweite Ausführungsbeispiel einer erfindungsgemäßen Trageinrichtung und deren Verriegelungseinheit,
- Figur 14: einen vertikalen Schnitt durch ein drittes, nicht erfindungsgemäßes Ausführungsbeispiel einer Trageinrichtung und deren Verriegelungselement,
- Figur 15: einen vertikalen Schnitt gemäß Figur 14, wobei die Trageinrichtung in einem Einbauzustand vorliegt,
- Figur 16: ein viertes, nicht erfindungsgemäßes Ausführungsbeispiel einer Trageinrichtung in einer Aufnahme,
- Figur 17: die Trageinrichtung nach Figur 16 im Ausbauzustand,
- Figur 18: das Schienensystem der Trageinrichtung nach Figur 16 mit einer erfindungsgemäßen Verriegelungseinheit in ihrem Freizustand und
- Figur 19: das Schienensystem der Trageinrichtung nach Figur 16 mit einer Verriegelungseinheit in ihrem Blockierzustand.

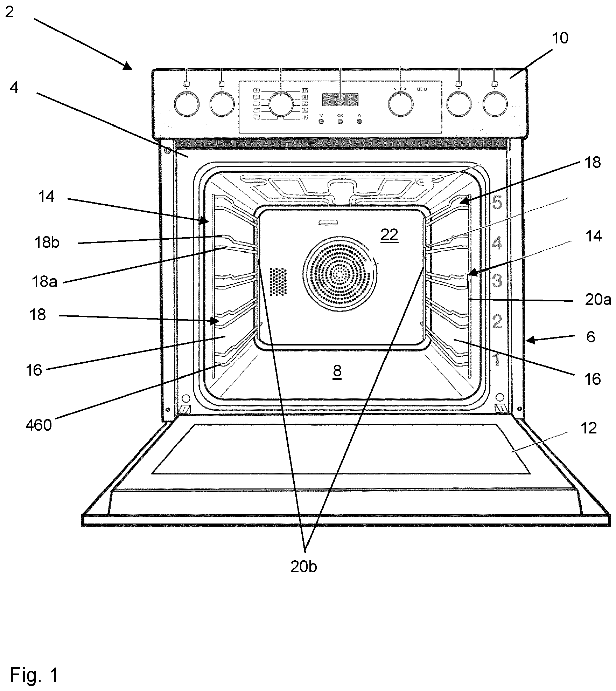

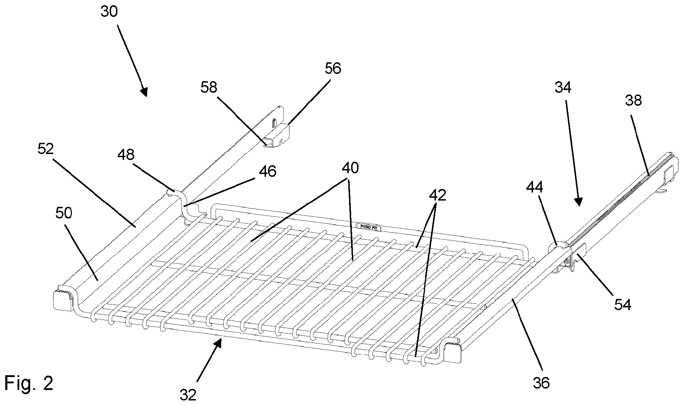

Alle nachfolgend beschriebenen Ausführungsbeispiele betreffen ein Haushaltsgerät 2,welches im vorliegenden Beispiel nach Art eines Backofens zum Garen von Lebensmitteln ausgebildet ist. Ein derartiges Haushaltsgerät 2 ist beispielhaft in Figur 1 dargestellt. Das Haushaltsgerät 2 weist ein von Wandungen 4 gebildetes, quaderförmiges Gehäuse 6 auf, welches einen Innenraum 8 einschließt. Eine Wandung 4 des Gehäuses , welche zugleich eine Frontseite 10 des Haushaltsgeräts 2 ausbildet, ist mit einer Tür 12 versehen. Ferner weist das Haushaltsgerät 2 im Innenraum 8 angeordnete Aufnahmen 14 zur Auflage einer Trageinrichtung 30 (Figuren 2 bis 4) auf. Die Aufnahmen 14 sind an zwei gegenüberliegenden Seitenwandungen 16 des Gehäuses 6 angeordnet und jeweils aus einer Mehrzahl von metallischen Stangen gebildet. Beide Aufnahmen 14 sind mit drei, in einem vertikalen Abstand zueinander angeordneten Stangenpaaren 18, jeweils umfassend zwei, horizontal verlaufende Aufnahmestangen 18a und 18b versehen. Dabei bildet diejenige Aufnahmestange 18a des Stangenpaares 18, welche unterhalb der jeweils anderen Aufnahmestange 18b des Stangenpaares 18 angeordnet ist,zusammen mit einer Aufnahmestange 18a auf der Aufnahme 14 der gegenüberliegenden Seitenwandung 16 eine Auflagefläche für die Trageinrichtung aus, während die obere Aufnahmestangen 18b der Stangenpaare 18 verhindern, dass die Trageinrichtung 30 infolge einer asymmetrischen Beladung kippt. Die einer Seitenwandung 16 zugeordneten Stangenpaare 18 sind an zwei vertikal ausgerichteten Verbindungsstangen 20a und 20b fixiert. Hierbei ist jeweils eine Verbindungsstange 20b an einer der Frontseite 10 abgewandten Rückwand 22 des Haushaltsgeräts 2 angeordnet, während die andere Verbindungsstange 22a in einem der Tür 12 zugewandten Bereich der jeweiligen Seitenwandung 16 angeordnet ist.

Die Trageinrichtung 30, welche für alle Ausführungsbeispiele zunächst einmal anhand der Figuren 2 bis 4 allgemein erläutert wird, umfasst ein Tragelement 32 sowie zwei Schienensysteme 34. Die Schienensysteme 34 weisen jeweils mindestens zwei relativ zueinander bewegliche Schienen 36, 38 und sind nach Art eines Teleskopauszugs gebildet. Dabei ist eine erste, untere Schiene 36 beweglich in der zweiten, oberen Schiene 38 gelagert. Es sei noch angemerkt, dass zwischen den unteren Schienen 36 und den oberen Schienen 38 des Schienensystems 34 jeweils eine dritte Schiene angeordnet sein kann, die dann beweglich gegenüber den anderen Schienen 36, 38 gelagert ist. Diese dritten Schienen sind in den Figuren 2 bis 4 nicht erkennbar, allerdings wird durch sie der Auszugsweg der oberen Schienen 38 samt Tragelement 32 vergrößert und es ist möglich, das Tragelement komplett aus dem Innenraum 8 herauszufahren. Das Tragelement 32 ist nach Art eines Rosts ausgebildet. Der Rost besteht aus einer Vielzahl von metallischen Auflagestangen 40, welche eine Auflagefläche für die zu garenden Lebensmittel (nicht dargestellt) bilden. Die Auflagestangen 40 sind an vier, quer zu den Auflagestangen angeordneten Haltestangen 42 fixiert. Das Tragelement 32 ist mittels zwei der Haltestangen 42 an je einer Oberseite der oberen Schienen 38 der Schienensysteme 34 befestigt, beispielsweise durch eine Schweißverbindung. Dabei sind die Enden 44 der beiden Haltestangen 42 etwa S-förmig geformt, sodass ein erster Abschnitt 46 des Endes 44 parallel zu einer Seitenfläche 50 der Schienen 38 und ein zweiter Abschnitt 48 parallel zu der Oberseite 52 der Schienen 38 verläuft.

An einer Unterseite sind die beiden unteren Schienen 36 jeweils mit zwei Auflageelementen 54 und 56 versehen. Die Auflageelemente 54, 56 sind an den Enden der beiden unteren Schienen 36 der Schienensysteme 34 angeordnet. Mittels der Auflageelemente 54, 56 lassen sich die Schienen 36 - und damit die Trageinrichtung 30 - auf der Aufnahme 14 des Haushaltsgeräts 2 halten. Dabei ist die Trageinrichtung 30 mittels der Auflageelemente 54, 56 auf die Aufnahmestangen 18a beider Aufnahmen 14 bzw. deren obere Auflageflächen der besagten Aufnahmestangen 18a aufgelegt. Die im Einbauzustand der Trageinrichtung 30 der Rückwand 22 des Haushaltsgeräts 2 zugewandten hinteren Auflageelement 56 umfassen ferner jeweils einen Sicherungsabschnitt 58, welcher zusätzlich sicherstellt, dass die Trageinrichtung bei der Entnahme des Lebensmittels infolge der durch das Lebensmittel auf den Rost einwirkenden Gewichtskraft bei einer Kippbewegung auf der Aufnahme 14 gehalten wird. Es sei hier noch erwähnt, dass die Aufnahme 14 neben der mit Schienensystemen 34 ausgestatteten Trageinrichtung 30 auch andere, in den Figuren nicht dargestellte Gargutträger wie Bratroste oder Backbleche ohne Schienensysteme 34 aufnehmen kann, die dann einfach mit ihrem Rand zwischen eines der Stangenpaare 18 auf jeder Seite eingeschoben werden können und von der jeweils unteren Aufnahmestange 18a getragen werden.

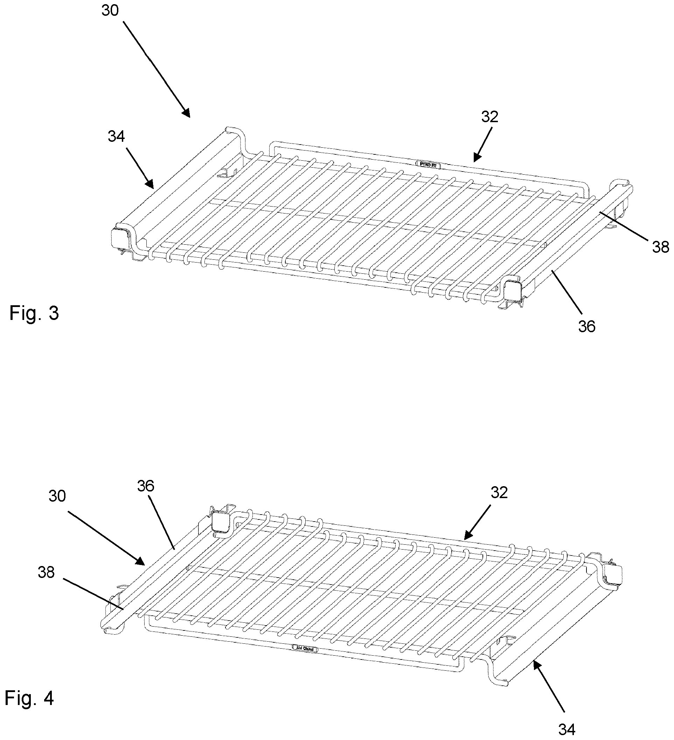

Figur 2 zeigt die Trageinrichtung 30 in einem Zustand, in dem die Schienensysteme 34 sich in einem ausgezogenen Zustand befinden, das heißt, die obere Schiene 38 mit dem Tragelement 32 ist gegenüber der unteren Schiene 36 nach vorn bewegt. Dadurch sind auf dem Tragelement 32 befindliche Lebensmittel (nicht dargestellt) besonders einfach aus dem Innenraum 8 des Haushaltsgeräts 2 zu entnehmen. Aus diesem Grund ist die Trageinrichtung 30 mittelbar in Kraft übertragender Weise an Gehäuse 6, nämlich über die Aufnahmen 14, gelagert. Insbesondere entfällt hierdurch eine Entnahme der gesamten Trageinrichtung 30, sofern lediglich der Garzustand des Lebensmittels geprüft werden soll oder das Lebensmittel im Innenraum 8 des Haushaltsgeräts 2 platziert oder aus diesem herausgenommen werden soll. Figur 3 zeigt entgegen Figur 2 die Trageinrichtung 30 in einem Zustand, in dem die Schienensysteme 34 sich in einem eingeschobenen Zustand befinden. Es soll nun sichergestellt werden, dass der in Figur 3 dargestellte Zustand in einem Ausbauzustand der Trageinrichtung 30 immer vorliegt, oder zumindestens dauerhaft hergestellt werden kann, um hierdurch zu vermeiden, dass es zu einer Behinderung des Verwenders durch das Tragelement 32 oder durch die Schienen 36, 38 des Schienensystems 34 kommt, die auftreten könnte, wenn diese infolge einer Veränderung der Ausrichtung der Trageinrichtung 30 im Raum - beispielsweise bei einem Kippen der Trageinrichtung 30 - ungewollt ausfahren würden. In einem Einbauzustand der Trageinrichtung 30 dagegen sollen beide gezeigten Zustände möglich sein. Während Figur 3 die Trageinrichtung 30 - unabhängig davon, ob sie sich in einem Einbau- oder Ausbauzustand befindet - in einer Nutzungsausrichtung zeigt, bei der die oberen Schienen 38 über den unteren Schienen 36 angeordnet sind, ist in der Figur 4 die Trageinrichtung 30 in einem Ausbauzustand gegenüber der Nutzungsausrichtung um 180° gedreht, das heißt, dass sie gewissermaßen "auf dem Kopf steht". Auch in dieser Lage soll es es bei ausgebauter Trageinrichtung nicht möglich sein, dass es zu einer Behinderung des Verwenders durch das Tragelement 32 oder durch die Schienen 36, 38 des Schienensystems 34 kommt, die auftreten könnte, wenn diese infolge einer Veränderung der Ausrichtung der Trageinrichtung 30 im Raum - beispielsweise bei einem Kippen der Trageinrichtung 30 - ungewollt ausgezogen würden. Das Haushaltsgerät 2 besitzt deshalb zwei gleichartige Verriegelungseinheiten, die jeweils einem der Schienensysteme zugeordnet sind.

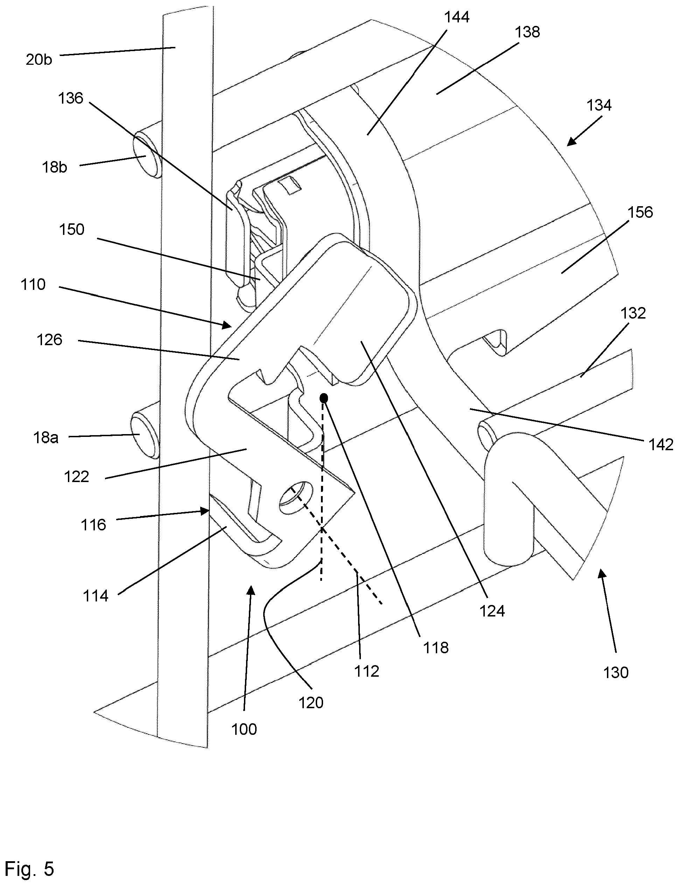

In den Figuren 5 bis 8 und im folgenden Beschreibungsteil ist ein erstes Ausführungsbeispiel einer solchen Verriegelungseinheit 100 erläutert, dabei wird im Weiteren lediglich auf eine der Verriegelungseinheiten 100 eingegangen. Die Verriegelungseinheit 100 umfasst in dem gezeigten Beispiel zwei Verriegelungselemente110 und 150. Ein erstes Verriegelungselement 110, das um eine Drehachse 112 verdrehbar an der Trageinrichtung 130 gelagert ist, ist mittelbar der unteren Schiene 136 des Schienensystems 134 zugeordnet. Dabei ist das Verriegelungselement 110 unmittelbar an einem Auflageelement 156 der Trageinrichtung 130 angeordnet, wobei die Trageinrichtung 130 mittels des Auflageelements 156 auf eine Aufnahmestange 18a der Aufnahme 14 bzw. eine deren obere Auflagefläche aufgelegt ist. Die untere Schiene 136 des Schienensystems 134 ist unmittelbar mit dem Auflageelement 156 gekoppelt. Das zweite Verriegelungselement 150 ist um eine Drehachse 152 verdrehbar an der Trageinrichtung 130 angeordnet, wobei das Verriegelungselement 150 unmittelbar der oberen Schiene 138 des Schienensystems 134 zugeordnet ist, mit der das Tragelement 132 mittels der Enden 144 seiner Haltestangen 142 verbunden ist.

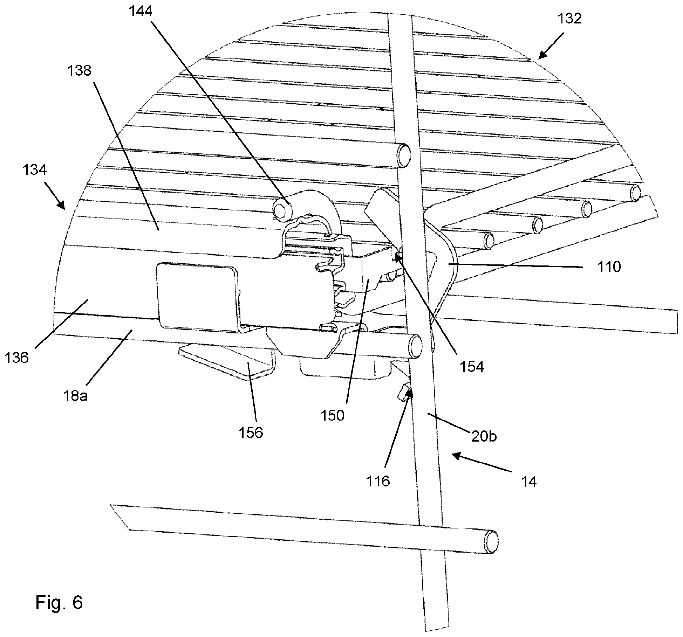

Die Verriegelungseinheit 100 ist zwischen einem Blockierzustand und einem Freizustand überführbar. Der Blockierzustand der Verriegelungseinheit 100 korrespondiert mit Blockierstellungen der Verriegelungselemente 110, 150, während der Freizustand der Verriegelungseinheit 100 mit Freistellungen der Verriegelungselemente 110, 150 korrespondiert. Der Freizustand der Verriegelungseinheit 100 ist besonders gut anhand der Figuren 5 und 6 erkennbar. Er liegt vor, wenn die Verriegelungselemente 110, 150 losgelöst voneinander vorliegen, sodass sie eine Bewegung der beiden Schienen 136 und 138 des Schienensystems 134 relativ zueinander nicht behindern. In besonders vorteilhafter Weise ist das erste Verriegelungselement 110 in dem gezeigten Beispiel mit einer Querstrebe 114 versehen, mittels der das Verriegelungselement 110 an einer Anschlagstelle 116 an einer Vertikalstrebe 20b der Aufnahme 14 anschlagen kann. Hierbei steht das Verriegelungselement 110 über das Tragelement 132 vor. Dies hat zur Folge, dass die Trageinrichtung 130 vollständig in ihren Einbauzustand überführt werden kann, indem sie in das Haushaltsgerät 2 eingesetzt wird. Hierbei kommt es nicht zu einer Kollision des Tragelements 132 mit der Aufnahme 14. Gleichwohl kommt es zu der gewünschten Kollision des Verriegelungselements 110 mit der Aufnahme 14, sodass letzteres selbsttätig, das heißt ohne manuelles Zutun des Nutzers des Haushaltsgeräts 2, in seine Freistellung verschwenkt und einen Formschluss mit dem zweiten Verriegelungselement 150 auflöst. Auf diese Weise ist es infolge des Einsetzens der Trageinrichtung 130 in das Haushaltsgerät 2 gewährleistet, dass die Verriegelungseinheit 100 automatisch in ihren Freizustand überführt wird, woraufhin das Schienensystem 134 freigegeben und folglich die beiden Schienen 136, 138 relativ zueinander bewegbar sind.

In umgekehrter Weise wird die Verriegelungseinheit 100 im Zuge der Überführung der Trageinrichtung 130 von ihrem Einbauzustand in einen Ausbauzustand, in dem die Trageinrichtung 130 aus dem Haushaltsgerät ausgebaut ist und mithin körperlich getrennt von letzterem vorliegt, automatisch in ihren Blockierzustand überführt. Bei der Überführung wird davon ausgegangen, dass die oberen Schienen 138 mit dem Tragelement 132 vollständig auf die unteren Schienen 136 aufgeschoben sind. Die automatische Überführung in den Blockierzustand liegt darin begründet, dass sich ein Schwerpunkt 118 des Verriegelungselements 110 bei Vorliegen des Verriegelungselements 110 in dessen Freistellung außermittig bezogen auf die Drehachse 112 des Verriegelungselements 110 befindet. Mithin verläuft eine Wirkungslinie 120 einer auf das Verriegelungselement 110 infolge Eigengewicht wirkenden Gewichtskraft unter einem Hebelarm 122 bezogen auf die Drehachse 112. Die Gewichtskraft bewirkt mithin ein Rückstellmoment auf das Verriegelungselement 110, infolgedessen das Verriegelungselement 110 ausgehend von seiner Freistellung selbsttätig in eine Blockierstellung verschwenkt, sobald das Verriegelungselement 110 frei verdrehbar ist. Letzteres ist in dem Moment der Fall, in dem die Trageinrichtung 130 derart von der Aufnahme 14 des Haushaltsgeräts 2 gelöst wird, dass der Anschlag des Verriegelungselements 110 an der Vertikalstrebe 20b der Aufnahme 14 wegfällt. Damit der Schwerpunkt 118 gewissermaßen auf der "richtige Seite" der Drehachse 112 angeordnet ist, verfügt das Verriegelungselement 110 in dem gezeigten Beispiel über ein Kopfgewicht 124, das an einem Hakenabschnitt 126 des Verriegelungselements 110 angeordnet ist.

Die Überführung des Verriegelungselements 110 in dessen Blockierstellung bedeutet, dass das Verriegelungselement 110, das hier in Form eines Hakens ausgebildet ist, mit dem Hakenabschnitt 126 formschlüssig mit dem zweiten Verriegelungselement 150 eingreift, wobei der Hakenabschnitt 126 in eine Ausnehmung 154 des zweiten Verriegelungselements 150 einfährt. Eine Stellung des zweiten Verriegelungselement 150 ändert sich dabei zunächst nicht. Der Formschluss der beiden Verriegelungselemente 110, 150 korrespondiert mit dem Blockierzustand der Verriegelungseinheit 100, bei dessen Vorliegen die beiden Schienen 136, 138 des Schienensystems 134 nicht relativ zueinander bewegt werden können. Folglich ist es unterbunden, dass das Schienensystem 6 in unbeabsichtigter Weise auszieht. Die Sicherung des Schienensystems 134 gegen dieses Ausziehen erfolgt dabei automatisch, das heißt ohne manuelles Zutun des Nutzers des Haushaltsgeräts 2. Hierdurch wird eine besonders hohe Sicherheit gegen eine Fehlbedienung erreicht.

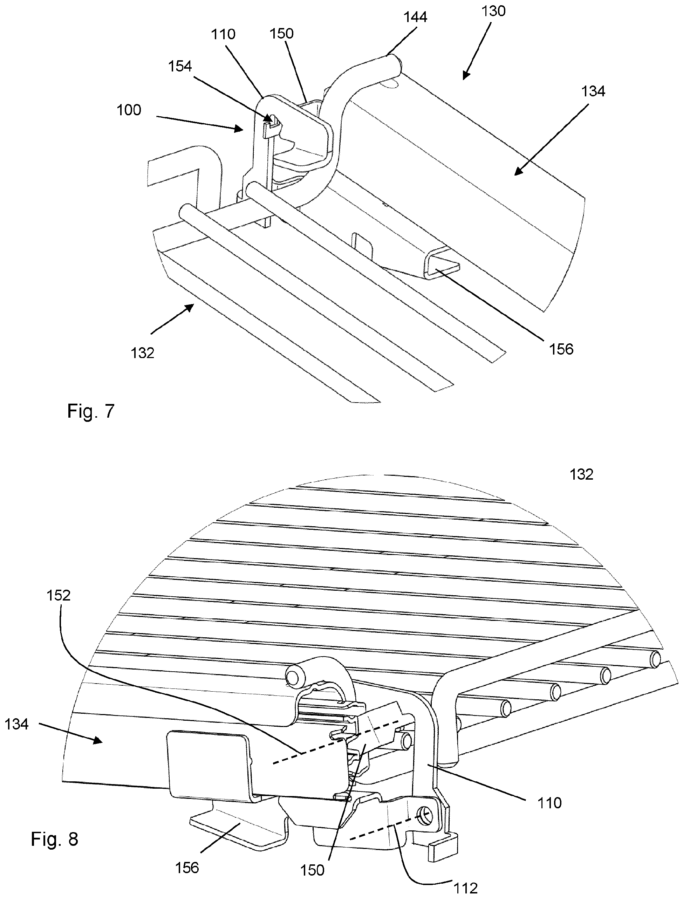

Der Blockierzustand der Verriegelungseinheit 100 ist besonders gut anhand der Figuren 7 und 8 erkennbar. Hierbei ist erwähnenswert, dass der Blockierzustand der Verriegelungseinheit 100 bei Vorliegen der Verriegelungselemente 110, 150 in verschiedenen Blockierstellungen vorliegen kann. Ein erstes Szenario ist vorstehend bereits beschrieben. Hierbei wird die Trageinrichtung 130 ausgehend von ihrem Einbauzustand aus dem Haushaltsgerät 2 entfernt, wobei die Trageinrichtung 130 entlang unteren Aufnahmestange 18a der Aufnahme 14 aus dem Innenraum 8 herausgezogen wird. Hierbei verliert des Verriegelungselement 110 seinen Anschlag an der hinteren Vertikalstrebe 20b und wird infolge seines Eigengewichts automatisch in seine Blockierstellung verdreht und mit dem zweiten Verriegelungselement 150 in Eingriff gebracht. Die beiden Verriegelungselemente 110, 150 befinden sich daraufhin jeweils in einer ersten Blockierstellung. Dies ist in Figur 7 dargestellt. Die Trageinrichtung 130 befindet sich dabei in einer Nutzungsausrichtung. Bei Vorliegen in dieser Nutzungsausrichtung ist das Tragelement 132 zumindest im Wesentlichen horizontal im Raum orientiert, sodass ein Gegenstand auf einer Ablageebene des Tragelement 132 lagerbar ist, und zwar in der in Figur 3 gezeigten Position. In dem gezeigten Beispiel ist mithin das als Rost ausgebildete Tragelement 132 dazu geeignet, ein jeweiliges Gargut aufzunehmen. Das Tragelement 132 mithin dazu vorgesehen, einen Gegenstand aufzunehmen.

Bei Vorliegen der Trageinrichtung 130 in ihrem Ausbauzustand, in dem sie körperlich von dem Gehäuse 6 des Haushaltsgerät 2 getrennt ist, ist es gleichwohl möglich, die Trageinrichtung 130 in andere Ausrichtung zu überführen, beispielsweise in eine Umkehrausrichtung, wie sie in Figur 4 dargestellt ist. Dies kann insbesondere zu Reinigungzwecken vorgesehen sein. In dieser Umkehrausrichtung ist die Trageinrichtung 130 gegenüber der Nutzungsausrichtung um 180° verdreht, sodass sie gewissermaßen verkehrt herum ausgerichtet ist bzw. "auf dem Kopf steht". Erfindungsgemäß ist das Schienensystem 134 auch bei dieser Ausrichtung der Trageinrichtung 130 gegen das unbeabsichtigte Ausziehen gesichert und bleibt es, wenn die Trageinrichtung 130 anschließend in eine andere Ausrichtung gekippt wird. Zu diesem Zweck ist das zweite Verriegelungselement 150 bei dem gezeigten Ausführungsbeispiel um die Drehachse 152 relativ zu der Trageinrichtung 130 verdrehbar. Dies bietet den Vorteil, dass das zweite Verriegelungselement 150 sich infolge der sich ändernden Ausrichtung der auf es einwirkenden Gewichtskraft bewegen kann, wodurch der Formschluss mit dem ersten Verriegelungselement 110 auch dann beibehalten wird, wenn es sich schwerkraftbedingt dreht. Dies ergibt sich besonders gut anhand von Figur 8, die das zweite Verriegelungselement 150 in einer zeichnerisch "nach oben" geschwenkten Blockierstellung zeigen. Tatsächlich ist das Verriegelungselement 150 in der Umkehrausrichtung der Trageinrichtung 130 immer "nach unten" geschwenkt, das heißt jeweils einer Wirkungsrichtung der Schwerkraft folgend. Die Darstellung in Figur 8 zeigt die Trageinrichtung 130 gewissermaßen falsch herum. Die Drehbarkeit des zweiten Verriegelungselement 150 führt dazu, dass letzteres mit seiner Ausnehmung 154 den Formschluss mit dem ersten Verriegelungselement 110 beibehält, sodass im Ergebnis das Schienensystem 134 unabhängig von der Ausrichtung der Trageinrichtung 130 im Raum gegen unbeabsichtigtes Ausziehen blockiert ist. Die Verriegelungseinheit 100 befindet sich mithin wunschgemäß unabhängig von der Ausrichtung der Trageinrichtung 130 in ihrem Blockierzustand.

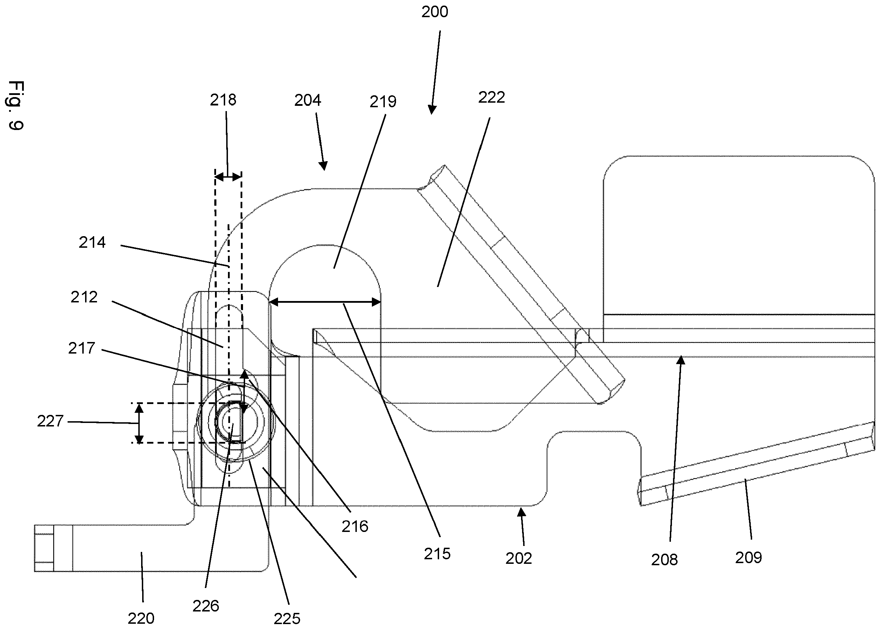

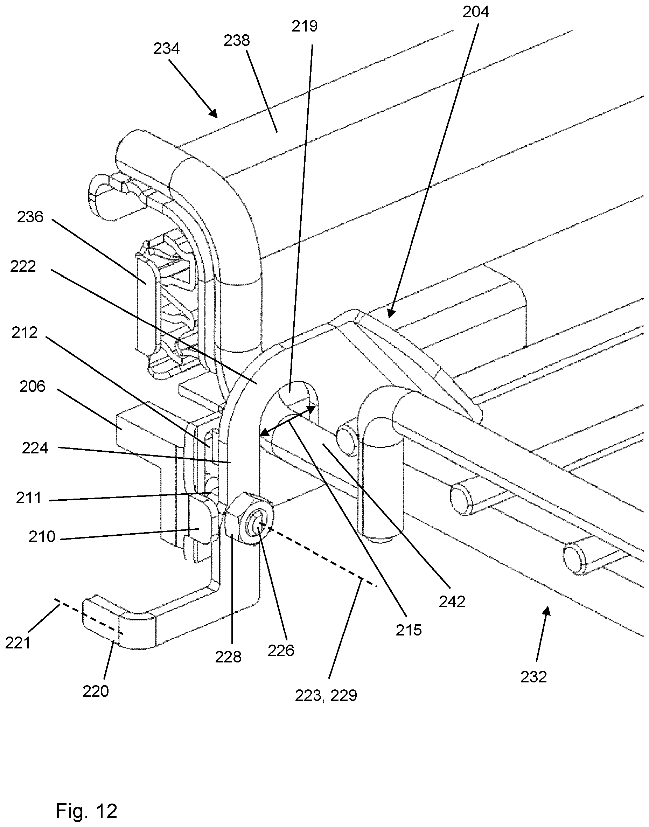

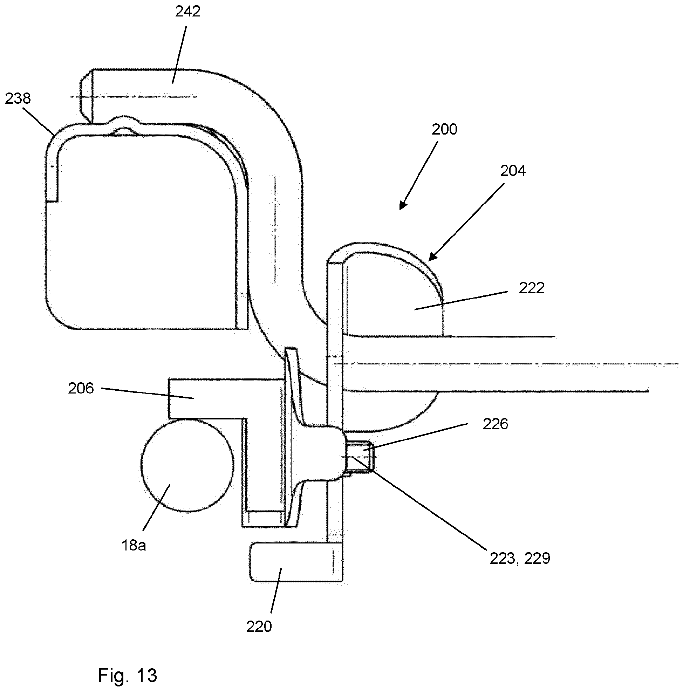

In den Figuren 9 bis 13 ist ein zweites, nicht erfindungsgemäßes Ausführungsbeispiel einer Verriegelungseinheit 200 dargestellt und nachfolgend beschrieben. Die Verriegelungseinheit 200 umfasst einen Ablageabschnitt 202, ein Verriegelungselement 204 sowie eine Führungseinrichtung206, welche in den Figuren 12 und 13 gezeigt ist, und ist an einer unteren Schiene 236 der Trageinrichtung 230 angeordnet.

Mittels des Ablageabschnitts 202 ist die Trageinrichtung 230 auf die Aufnahme 14 des Haushaltgeräts 2 auflegbar und somit in ihren Einbauzustand überführbar. Hierfür weist der Ablageabschnitt 202 eine Ablagefläche 208 auf, welche in dem Einbauzustand der Trageinrichtung 230 mit der Auflagefläche der unteren Aufnahmestange 18a der Aufnahme 14 in Kontakt steht. Ein seitlich an der Verriegelungseinheit 200 angeordnetes Halteelement 209 verhindert dabei ein Kippen der Trageinrichtung 230 infolge einer asymmetrischen Beladung eines Tragelements 232 der Trageinrichtung 230.

Ferner ist die Verriegelungseinheit 200 mit einem Langloch 212 versehen, welches bezogen auf die Ebene, die das Tragelement 232 bildet, senkrecht orientiert ist. Bei Vorliegen der Trageinrichtung 230 in ihrem Einbauzustand ist das Langloch 212 vertikal orientiert. Entlang einer Längsachse 214 weist das Langloch 212 einseitig eine halbkreisförmige Aufweitung 216 auf, welche in einem Mittelbereich des Langlochs 212 angeordnet ist. Die Aufweitung 216 weist somit einen Wirkungsbereich auf, in welchem eine Breite 218 des Langlochs 212 größer ist als außerhalb des Wirkungsbereichs.

Das Verriegelungselement 204 umfasst einen Anschlagabschnitt , einen Hakenabschnitt 222 und einen Verbindungsabschnitt 224. Der Verbindungsabschnitt 224 ist stegartig ausgebildet und in einem mittleren Bereich mit einer kreisförmigen Öffnung 225 versehen. Ein Teilbolzen 226, dessen Querschnitt von einer Halbkreisfläche gebildet ist, ist durch die Öffnung 225 hindurch geführt. Der Durchmesser 227 des Teilbolzens 226 entspricht hierbei in etwa dem Durchmesser 217 der Aufweitung 216 des Langlochs 212. Der Teilbolzen 226 ist wie in Figur 12 gezeigt mittels einer Mutter 228 unbeweglich an dem Verriegelungselement 204 verankert. Der Anschlagabschnitt 220 des Verriegelungselements 204, welcher an einem Ende des Verbindungsabschnitts 224 angeordnet ist, weist eine L-förmige Form auf und ist an seinem freien Ende um 90° gegenüber einer Längsachse 229 des Teilbolzens 226, welche zugleich eine Drehachse 223 ausbildet, umgebogen, sodass eine Längsachse 221 des Anschlagabschnitts 220 parallel zu der Drehachse 223 des Teilbolzens 226 verläuft. Der Hakenabschnitt 222 ist an dem anderen Ende des Verbindungsabschnitts 224 angeordnet und weist eine U-förmige Ausnehmung 219 auf. Ein Öffnungsquerschnitt 215 der Ausnehmung 219 ist größer als der Durchmesser einer Haltestange 242 des Tragelements 232. Ferner weist die Verriegelungseinheit 200 wie in Figur 12 gezeigt eine Führungseinrichtung 206 auf. Die Führungseinrichtung 206 ist L-förmig ausgebildet und weist eine kreisförmige Öffnung (in der Figur nicht erkennbar) auf. Der Teilbolzen 226 ist ausgehend von dem Verriegelungselement 204 durch das Langloch 212 der Verriegelungseinheit 200 und die Öffnung der Führungseinrichtung 206 hindurch geführt, wobei zwischen dem Langloch 212 und dem Verriegelungselement 204 ein zusätzliches Distanzelement 211 in Form eines Rings angeordnet ist. Das dem Verriegelungselement 204 abgewandte Ende des Teilbolzens 226 ist hierbei drehbar in der Öffnung der Führungseinrichtung 206 gelagert. Entlang des Langlochs 212 ist der Teilbolzen 226 verschiebbar gelagert. Dabei ist das Verriegelungselement 204 derart in Kraft übertragender Weise mit der Führungseinrichtung 206 verbunden, dass eine Bewegung der Führungseinrichtung 206 entlang des Langlochs 212 auf das Verriegelungselement 204 übertragen wird.

Das Verriegelungselement 204 ist somit zwischen mehreren Festpositionen und einer Drehposition überführbar. In den Festpositionen, welche in den Figuren 9, 10 und 12 gezeigt sind, ist ein Verdrehen des Verriegelungselements 204 zumindest im Wesentlichen verhindert. Sofern sich der Teilbolzen 226 außerhalb des Wirkungsbereichs der Aufweitung 216 befindet, wird eine freie Verdrehung des Verriegelungselements 204 dadurch verhindert, dass der Teilbolzen 226 lediglich bis zu einem Anschlag desselben an dem Langloch 212 verdrehbar ist. Dies wird dadurch bewirkt, dass der Durchmesser 227 des Teilbolzens 226 größer ausgebildet ist als die Breite 218 des Langlochs 212.

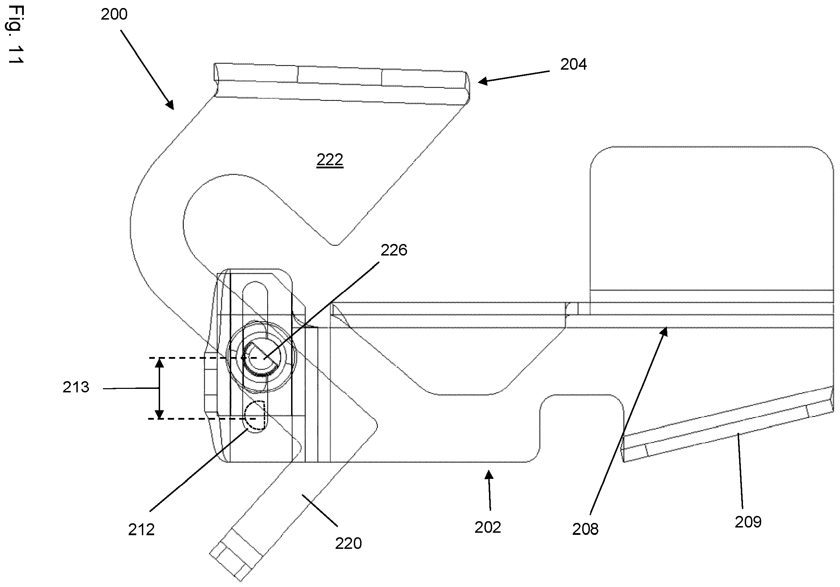

In einer Drehposition des Verriegelungselements 204 hingegen, welche in Figur 11 gezeigt ist, ist das Verriegelungselement 204 verdrehbar. Das Verriegelungselement 204 nimmt die Drehposition dann ein, wenn sich der Teilbolzen 226 in dem Wirkungsbereich der Aufweitung 216 befindet. Dabei ist der Wirkungsbereich gerade so dimensioniert, dass sich der Teilbolzen 226 frei in dem Wirkungsbereich verdrehen lässt. Die Verdrehbarkeit wird lediglich dadurch begrenzt, dass die Verriegelungseinheit 200 einen Anschlagabschnitt 201 aufweist, welcher parallel zu der Drehachse 223 des Teilbolzens 226 angeordnet ist. Hierbei schlägt das Verriegelungselement 204 im Zuge der Verdrehung desselben an dem Anschlagabschnitt 210, welcher in Figur 12 gezeigt ist, an und verhindert somit eine Verdrehung des Verriegelungselements 204 über diesen Punkt hinaus.

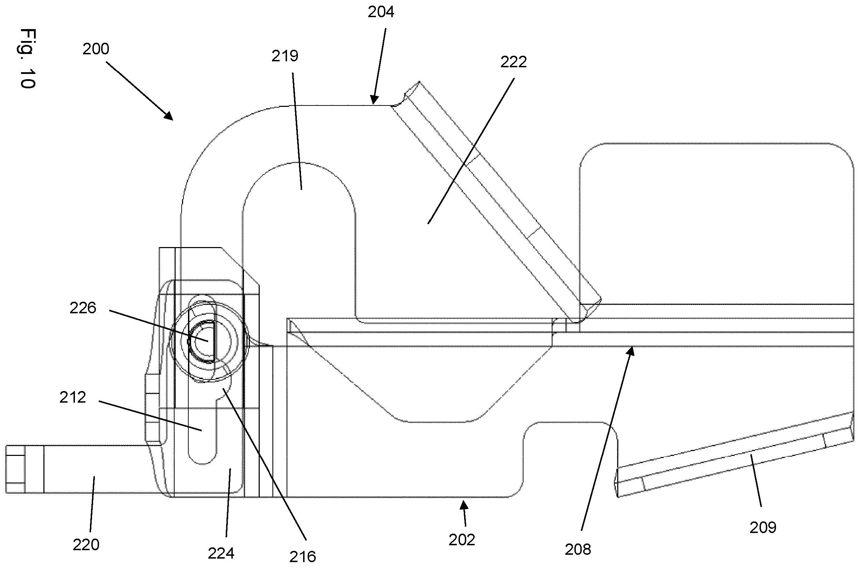

In dem Ausbauzustand wird das Verriegelungselement 204 infolge der auf das selbige wirkenden Schwerkraft in eine Maximalposition in dem Langloch 212 verschoben. Dabei nimmt der Teilbolzen 226 eine erste Maximalposition (dargestellt in Figur 9 und Figur 12) an, sofern sich die Trageinrichtung 230 in einer Nutzungsausrichtung (dargestellt in Figur 3) befindet. Die Nutzungsausrichtung ist dadurch gekennzeichnet, dass die Trageinrichtung 230 üblicherweise in dieser Ausrichtung zur Garung der Lebensmittel verwendet wird. Die zweite Maximalposition (dargestellt in Figur 10) wird vom Teilbolzen 226 dann eingenommen, wenn die Trageinrichtung 230 in einer Umkehrausrichtung (dargestellt in Figur 4) vorliegt, in der die Trageinrichtung 230 um 180° um eine Horizontale gegenüber der Nutzungsausrichtung verdreht ist. In den Maximalpositionen liegt das Verriegelungselement 204 in einer Festposition vor, bei der eine Verdrehung des Verriegelungselements 204 blockiert ist. Das Verriegelungselement 204 liegt somit in seiner Blockierstellung vor. Hierbei greift der Hakenabschnitt 222 des Verriegelungselements 204, wie in Figur 12 gezeigt, formschlüssig um die Haltestange 242 des Tragelements 232, ein und verhindert somit ein Ausziehen der oberen Schienen 238 und des daran befestigten Tragelements 232 relativ zu den unteren Schienen 236 der Schienensysteme 234.

Bei der Überführung der Trageinrichtung 230 von ihrem Ausbauzustand in einen Einbauzustand wird die Trageinrichtung 230 mittels des Ablageabschnitts 202 der Verriegelungseinheit 200 auf die unteren Aufnahmestangen 18a der Aufnahmen 14 aufgelegt. Hierbei wird die Führungseinrichtung 206 derart entlang der Längsachse 214 des Langlochs 212 bewegt, dass eine der unteren Aufnahmestange 18a zugewandte Unterseite derselben parallel zu der Ablagefläche 208 des Ablageabschnitts 202 ausgerichtet ist. Infolge der kraftschlüssigen Kopplung der Führungseinrichtung 206 mit dem Verriegelungselement 204 wird letzteres ebenfalls entlang des Langlochs 212 bewegt. Hierbei entspricht der Weg, den das Verriegelungselement 204 entlang der Längsachse 214 des Langlochs 212 zurücklegt, gerade dem Abstand zwischen der ersten Maximalposition des Verriegelungselements 204 und der Position, in der der Teilbolzen 226 in dem Wirkungsbereich der Aufweitung 216 angeordnet ist. Der Teilbolzen 226 wird somit automatisch im Zuge der Überführung der Trageinrichtung 230 in ihren Einbauzustand in den Wirkungsbereich der Aufweitung 216 verschoben. Ferner schlägt der Anschlagabschnitt 220 bei der Überführung der Trageinrichtung 230 in ihren Einbauzustand an der hinteren vertikale Verbindungsstange 20b an. Hierdurch erfolgt eine Verdrehung des Verriegelungselements 204 um die Drehachse des Teilbolzens 226, sodass das Verriegelungselement 204 in dessen Freistellung überführt wird. Hierdurch wird der Hakenabschnitt 222 die Haltestange 242 freigegeben, wodurch ein Ausfahren der Schienensysteme 234 freigegen ist. Die Verriegelungseinheit 200 liegt nunmehr in ihrem Freizustand vor. Die Trageinrichtung 230 kann mithin relativ zu dem Gehäuse 6 des Haushaltgeräts 2 ausgezogen werden.

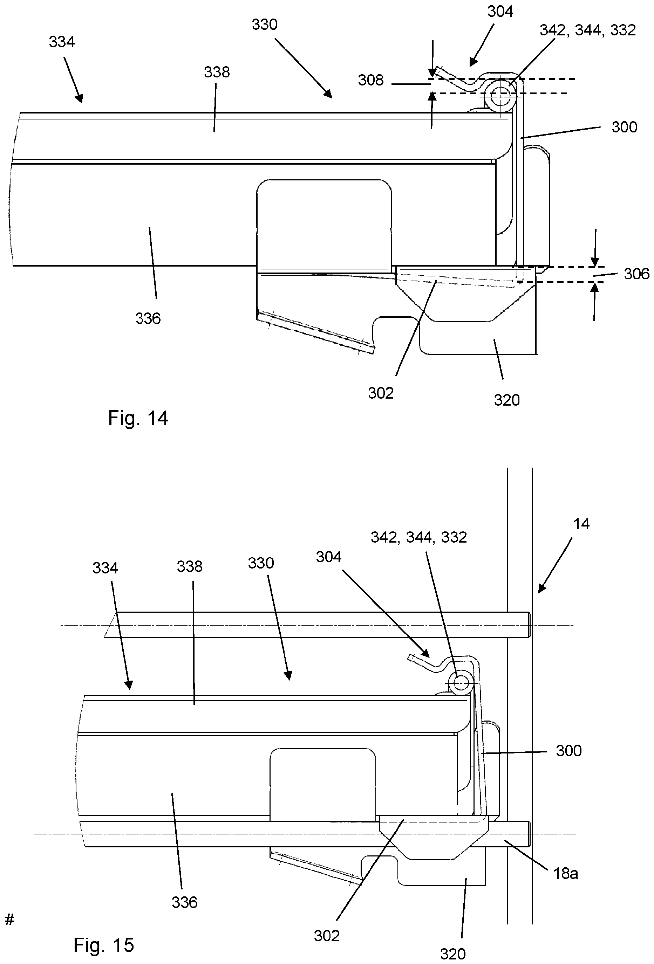

Eine Trageinrichtung 330 nach einem dritten, nicht erfindungsgemäßen Ausführungsbeispiel ist mit zwei Verriegelungselementen 300 versehen, welche jeweils an den unteren Schienen 336 der beiden Schienensysteme 334 angeordnet ist. In der Beschreibung dieses Ausführungsbeispiels werden Verriegelungseinheiten durch die Verriegelungselemente 300 selbst gebildet und sind mit ihnen identisch. Figur 14 zeigt einen vertikalen Schnitt durch ein Verriegelungselement 300 sowie durch die Trageinrichtung 330. Das Verriegelungselement 300 ist als Federelement ausgebildet. Dabei weist das Verriegelungselement 300 einen Befestigungsabschnitt 302 und einen Halteabschnitt 304 auf. Der Befestigungsabschnitt 302 dient zur Befestigung des Verriegelungselements 300 an der unteren Schiene 336 des Schienensystems 334. Hierbei ist ein freies Ende des Befestigungsabschnitts 302 fest mit der Schiene 336 verbunden, beispielsweise durch Verschweißen. Der Halteabschnitt 304 ermöglicht die Bildung eines Formschlusses mit der Trageinrichtung 330, insbesondere eines Endes 344 einer Haltestange 342 des Tragelements 332, welches wie weiter oben beschrieben mit der oberen Schiene verbunden, vorzugsweise verschweißt ist. Ein Querschnitt des Halteabschnitts 304 ist hierbei in etwa S-förmig ausgebildet und ermöglicht somit ein formschlüssiges Umgreifen der Haltestange 342. In einem Blockierzustand, wie in der Figur 14 dargestellt, blockiert das Verriegelungselement 300 unter Bildung eines Formschlusses mit dem Ende 344 der Haltestange 342 das Ausziehen des Schienensystems 334, wobei infolge der Verbindung des Verriegelungselements 300 mit der unteren Schiene 336 und des Tragelements 332 mit der oberen Schiene 338 die beiden Schienen 336 und 338 miteinander gekoppelt sind. Der in Figur 14 dargestellte Zustand der Trageinrichtung 330 entspricht ihrem Ausbauzustand.

In einem Einbauzustand hingegen, in dem die Trageinrichtung 330 in dem Haushaltsgerät 2 angeordnet ist und hierbei mit ihren Auflageelementen 320 auf der unteren Aufnahmestange 18a der Aufnahme aufliegt, bewirkt die infolge der durch das Eigengewicht der Trageinrichtung 330 hervorgerufene Gewichtskraft, dass das Verriegelungselement 300 derart verformt wird, dass der Halteabschnitt 304 des Verriegelungselements 300 die Haltestange 342 des Tragelements 332 freigibt. Figur 15 zeigt einen vertikalen Schnitt durch die Trageinrichtung 330 und das Verriegelungselement 300 in einem Einbauzustand der Trageinrichtung 330 und dem dadurch bewirkten Freizustand der Verriegelungseinheit 300. Insbesondere wird der Befestigungsabschnitt 302 derart verformt, dass selbiger parallel zu der unteren Aufnahmestange 18a der Aufnahme verläuft und vollständig auf dieser aufliegt. Infolgedessen wird der Halteabschnitt 304 entgegen der einwirkenden Gewichtskraft bewegt, indem die Trageinrichtung 330 gewissermaßen auf den Befestigungsabschnitt 302 aufgelegt wird. Dabei ist der Weg der Auslenkung an einen Durchmesser des Endes 344 der Haltestange 342 angepasst, sodass die Haltestange 342 des Tragelements 332 beim Ausziehen des Schienensystems 334 durch den entstandenen Spalt geführt werden kann. Mit anderen Worten übersteigt ein maximaler Verformungsweg 306 des Verriegelungselements 300 dessen Eingrifftiefe 308 an der Haltestange 342.

Wird die Trageinrichtung 330 nach der Verwendung aus dem Haushaltsgerät 2 entfernt, wird das Verriegelungselement 300 aufgrund des Wegfalls des Anschlags an der Aufnahme infolge der elastischen Verformung in dem Verriegelungselement 300 gespeicherten Rückstellkraft automatisch von seinem Freizustand in seinen Blockierzustand überführt. Ein Ausziehen des Schienensystems 334 ist mithin vorerst nicht möglich. Dies gilt sowohl für eine Nutzungsausrichtung der Trageinrichtung 330 als auch für eine um 180° gedrehte Umkehrausrichtung .

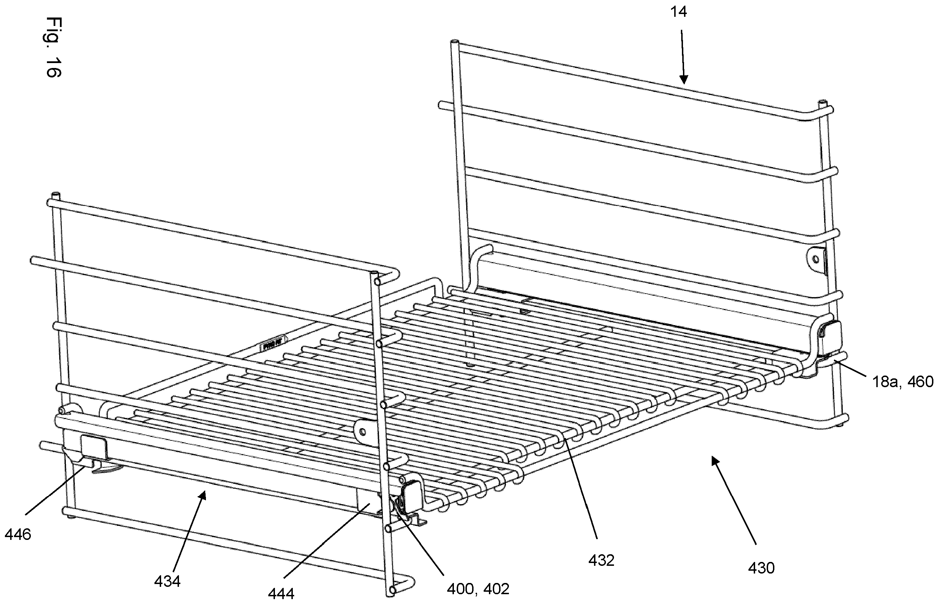

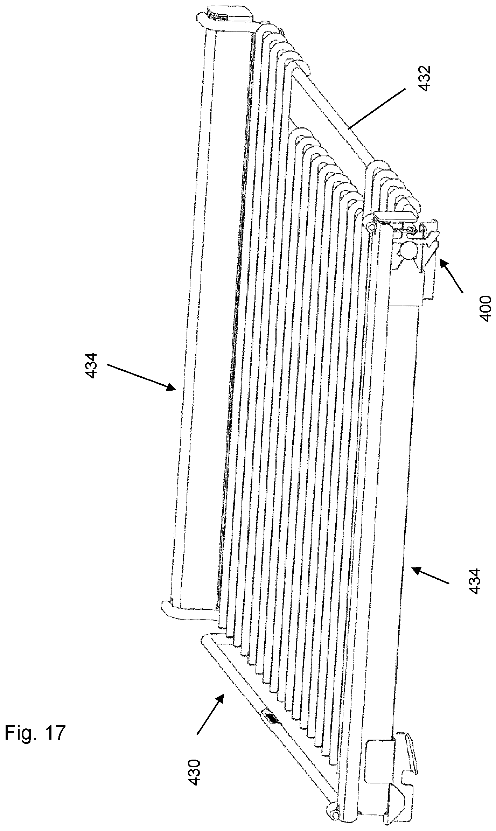

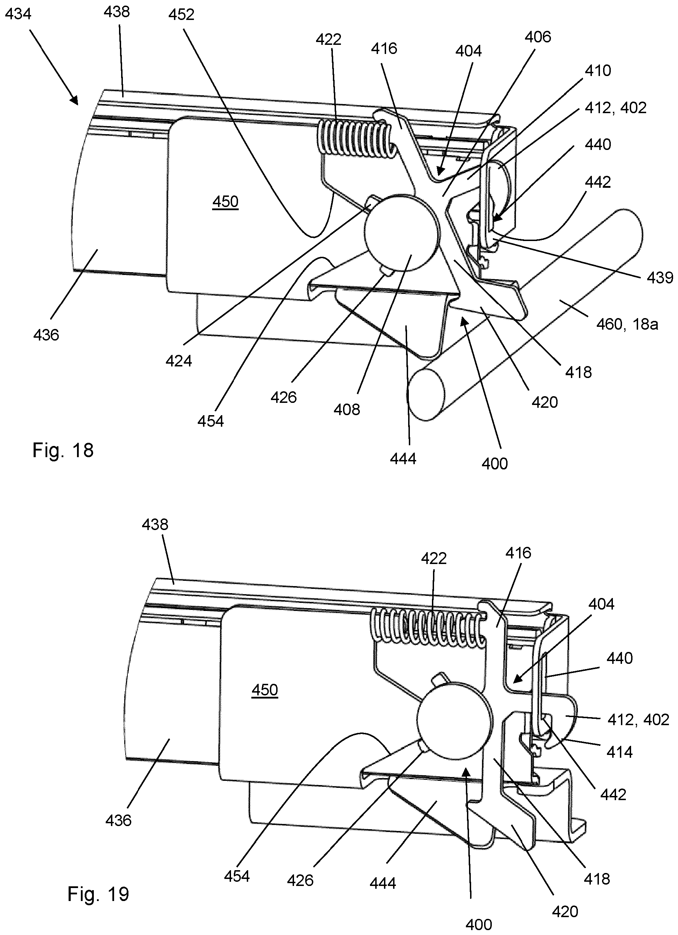

Die Figuren 16 bis 19 zeigen ein viertes, nicht erfindungsgemäßes Ausführungsbeispiel einer Trageinrichtung 430. Im Gegensatz zu den vorbeschriebenen Ausführungsformen sind die Verriegelungseinheiten 400 hier nicht im hinteren Bereich, sondern im vorderen Bereich der Schienensysteme 434 angeordnet, siehe Figur 16 und 17 zu erkennen ist. Auch hier werden die Verriegelungselemente 402 der Verriegelungseinheiten 400 beim Einsetzen der Trageinrichtung 430 in die Aufnahme 14, das heißt beim Überführen der Trageinrichtung 430 in ihren Einbauzustand, automatisch und ohne weiteres Zutun des Benutzers in ihren Freizustand überführt. Im Folgenden wird lediglich Bezug auf ein Schienensystem 434 und eine Verriegelungseinheit 400 genommen, gleichwohl sind an beiden Schienensystemen 434 Verriegelungseinheiten 434 vorgesehen. Es sei außerdem noch erwähnt, dass in den Figuren 18 und 19 das Tragelement 402 weggelassen wurde und nur ein Schienensystem 434 gezeigt ist.

Wie insbesondere aus den Figuren 17 und 18 zu erkennen ist, ist an der unteren Schiene 436 eines Schienensystems 434 ein Drehelement 404 drehbar gelagert. Das Drehelement 404 umfasst, ausgehend von einem zentralen Lagerbereich 406 einen Hakenarm 410, einen Federarm 416 und einen Betätigungsarm 418. Der Lagerbereich 406 besitzt eine Öffnung, die in den Figuren nicht erkennbar ist, weil durch sie ein Lagerbolzen 408 gesteckt ist, der an der unteren Schiene 436 befestigt ist. Vom Lagerbereich 406 erstrecken sich in den Figuren 17 bis 19 nach links zwei an das Drehelement 404 angeformte Anschläge 424 und 426. Der nach oben gerichtete Federarm 416 klemmt zusammen mit einem Haltelement 450, welches ebenfalls an der unteren Schiene 436 befestigt ist, eine Schraubenfeder 422 ein und drückt diese je nach Drehposition des Drehelements 404 mehr oder weniger zusammen. Der Betätigungsarm 418 erstreckt sich in den Figuren 17 bis 19 und damit in der Nutzungsausrichtung der Trageinrichtung 430 nach unten. Er besitzt einen angeformten Kontaktbereich 420, der in dem in den Figuren 16 und 18 gezeigten Einbauzustand der Trageinrichtung 430 an einem abgewinkelten Teilstück 460 der unteren Aufnahmestange 18a anliegt. Aus der Figur 1 ist zu erkennen, dass dieses abgewinkelte Teilstück 460 der unteren Aufnahmestange 18a sich im vorderen, zu einem der Tür 12 zugewandten Bereich der jeweiligen Seitenwandung 16 befindet und mit der vorderen vertikalen Verbindungsstange 20a verschweißt ist. Der Hakenarm 410, der sich in den Figuren 17 bis 19 nach rechts erstreckt, besitzt an seinem dem Lagerbereich 406 abgewandten Ende einen Haken 412, das eigentliche Verriegelungselement 402. Dieser ist so konstruiert und platziert, dass er unabhängig von der Drehposition des Drehelements 404 durch eine schlitzförmige Öffnung 440 greifen kann, die sich in einem abgewinkelten Ende 439 der oberen Schiene 438 befindet. Die gesamte Verriegelungseinheit 400 ist jeweils auf der Seite des Schienensystem 434 angeordnet, die zu der näherliegenden Seitenwandung 16 des Gehäuses 2 gerichtet ist. Sie befindet sich somit im Einbauzustand der Trageinrichtung 430 zwischen den jeweiligen Schienen 436 bzw. 438 und der jeweiligen Aufnahme 14 und ist deshalb für den Benutzer nicht erkennbar.

Um die Trageinrichtung 430 in den in den Figuren 16 und 18 gezeigten Einbauzustand zu bringen, wird diese, wie bei den zuvor beschriebenen drei Ausführungsbeispielen auch, mit ihren Auflageelementen 444 und 446 auf die unteren Aufnahmestangen 18a geschoben. Am Ende dieser Einschubbewegung gerät der Kontaktbereich 420 des Betätigungsarms 418 in Kontakt mit dem abgewinkelten Teilstück 460 der Aufnahmestange 18a und das gesamte Drehelement 404 wird aus der in den Figuren 17 und 19 gezeigten Positionen um ca. 30° gegen den Uhrzeigersinn in die in Figur 18 gezeigte Position gedreht, bis der obere Anschlag 424 gegen die obere Schräge 452 des Halteelements 450 drückt und dadurch die Drehbewegung gestoppt wird. In dieser Lage ist, wie in Figur 18 erkennbar, der Hakenarm 410 nach oben gedreht und der Haken 412 nicht mehr im Eingriff mit dem Rand 442 der Öffnung 440. Somit befindet sich die Verriegelungseinheit 400 in ihrem Freizustand. Mit der Drehung des Drehelements 404 gegen den Uhrzeigersinn wird auch der Federarm 416 in diese Richtung gedreht. Dabei drückt er die Schraubenfeder 422 gegen das Halteelement 450 und damit im Verlauf der Drehung zusammen. Das gesamte Drehelement 404 und damit insbesondere das Verriegelungselement 402 ist dadurch gegen die Kraft der Feder 422 vorgespannt und in einen Freizustand der Verriegelungseinheit 400 gedrückt. Die beiden Schienen 436 und 438 können gegeneinander bewegt und das Tragelement 432 kann zusammen mit den oberen Schienen 438, beispielsweise zur Be- und Entladung oder zur Kontrolle des Garguts während des Garvorgangs aus dem Innenraum 8 herausgezogen werden.

Beim Ausbauen der gesamten Trageinrichtung 430 aus dem Gerät 2 wird diese auf den unteren Aufnahmestangen 18a aus dem Gerät 2 herausgezogen. Dabei bewegt sich die untere Schiene 436 und damit auch die Verriegelungseinheit 400 mit ihrem Betätigungsarm 418 von dem abgewinkelten Teilstück 460 der Aufnahmestange 18a weg. Der Kontaktbereich 420 am Betätigungsarm 418 liegt dann nicht mehr an der Aufnahmestange 18a an, deshalb drückt die Schraubenfeder 422 das Drehelement 404 wieder in seine in den Figuren 17 und 19 dargestellte Position. Sollte in diesem Ausbauzustand der Trageinrichtung 430 das Tragelement 432 mit den oberen Schienen 438 bereits bis zum Ende auf die unteren Schienen 436 geschoben sein, wie in Figur 17 dargestellt, umgreift der Haken 412 den Rand 442 der Öffnung 440 und stellt einen Formschluss zwischen oberer Schiene 438 und unterer Schiene 436 her. Es wird dann automatisch der Blockierzustand des Verriegelungselements 402 erzeugt. Ist dagegen beim Ausbau der Trageinrichtung 430 die untere Schiene 436 noch ein Stück aus der oberen Schiene 438 herausgezogen (nicht dargestellt), so kann der Blockierzustand des Verriegelungselements 402 durch Einschieben der unteren Schiene 436 in die obere 438 durch den Benutzer hergestellt werden. Dazu ist der Haken 412 mit einer Anlaufschräge 414 versehen, die bei diesem Einschubvorgang das Drehelement 404 gegen die Kraft der Schraubenfeder 422 kurz gegen den Uhrzeigersinn dreht und den Hakenarm 410 nach oben bewegt. Wenn die Schienen 436 und 438 soweit zusammengeschoben sind, dass der Haken 412 vollständig durch die Öffnung 440 getaucht ist, bewegt die Feder 422 das Drehelement 404 wieder im Uhrzeigersinn und bringt den Haken 412 und damit das Verriegelungselement 402 in den Blockierzustand der Verriegelungseinheit 400.

Ein unterer Anschlag 426 drückt in dem in Figur 19 gezeigten Zustand des Drehelements 404 gegen die untere 454 Schräge des Halteelements 450. Dadurch wird verhindert, dass der Hakenarm 410 im Ausbauzustand der Trageinrichtung 430 und einem Zustand der Verriegelungseinrichtung 400, in dem der Haken 412 nicht in die Öffnung 440 eingreift, so weit gedreht wird, dass die Anlaufschräge 414 außerhalb ihres Wirkungsbereichs in Bezug auf die Öffnung 440 liegt. Außerdem verhindert der untere Anschlag 426 ein Drehen des Drehelements 404 in eine Postion, in der die Schraubenfeder aus ihrer Einklemmung zwischen Federarm 416 und Halteelement 450 herausfallen könnte.

Auch dieses Ausführungsbeispiel einer Trageinrichtung 430 besitzt Verriegelungseinrichtungen 400, deren Verriegelungselemente 402 in einem Ausbauzustand der Trageinrichtung 430 sowohl in deren Nutzungsausrichtung als auch in einer um 180° gedrehten Umkehrausrichtung sicher wirken.

**Bezugszeichenliste**

| | | | |
|---|---|---|---|
| 2 | Haushaltsgerät | 56 | hinteres Auflageelement |
| 4 | Wandungen | 58 | Sicherungsabschnitt |
| 6 | Gehäuse | | |
| 8 | Innenraum | | |
| 10 | Frontseite | | |
| 12 | Tür | | |
| 14 | Aufnahme | | |
| 16 | Seitenwandungen | | |
| 18 | horizontale Stangenpaare | | |
| 18a | untere Aufnahmestange | | |
| 18b | obere Aufnahmestange | | |
| 20a | vordere vertikale Verbindungsstangen | | |
| 20b | hintere vertikale Verbindungsstange | | |
| 22 | Rückwand | | |
| 30 | Trageinrichtung | | |
| 32 | Tragelement | | |
| 34 | Schienensystem | | |
| 36 | untere Schiene | | |
| 38 | obere Schiene | | |
| 40 | Auflagestangen (Rost) | | |
| 42 | Haltestangen (Rost) | | |
| 44 | Enden der Haltestangen | | |
| 46 | erster Abschnitt des Endes | | |
| 48 | zweiter Abschnitt des Endes | | |
| 50 | Seitenfläche der oberen Schiene | | |
| 52 | Oberseite der Schienen | | |
| 54 | vorderes Auflageelement | | |

### Erstes Ausführunasbeispiel:

- 100: Verriegelungseinheit
- 110: erstes Verriegelungselement
- 112: Drehachse des ersten Verriegelungseleme nts
- 114: Querstrebe
- 116: Anschlagstelle
- 118: Schwerpunkt
- 120: Wirkungslinie
- 122: Hebelarm
- 124: Kopfgewicht
- 126: Hakenabschnitt
- 130: Trageinrichtung
- 132: Tragelement
- 134: Schienensystem
- 136: untere Schiene
- 138: obere Schiene
- 142: Haltestangen
- 144: Enden der Haltestangen
- 150: zweites Verriegelungselement
- 152: Drehachse des zweiten Verriegelungseleme nts
- 154: Ausnehmung
- 156: hinteres Auflageelement

**Zweites Ausführungsbeispiel:**

| | | | |
|---|---|---|---|
| 200 | Verriegelungseinheit | 227 | Durchmesser des Teilbolzens |
| 201 | Anschlagabschnitt | 228 | Mutter |
| 202 | Anlageabschnitt | 229 | Längsachse des Teilbolzens |
| 204 | Verriegelungselement | 230 | Trageinrichtung |
| 206 | Führungseinrichtung | 232 | Tragelement |
| 208 | Ablagefläche | 234 | Schienensystem |
| 209 | Halteelement | 236 | untere Schiene |
| 210 | Anschlagabschnitt | 238 | obere Schiene |
| 211 | Distanzelement am Teilbolzen | 242 | Haltestange |
| 212 | Langloch | | |
| 213 | Abstand | | |
| 214 | Längsachse | | |
| 215 | Öffnungsquerschnitt der Ausnehmung | | |
| 216 | halbkreisförmige Aufweitung | | |
| 217 | Durchmesser der Aufweitung | | |
| 218 | Breite des Langlochs | | |
| 219 | u-förmige Ausnehmung des Hakenabschnitts | | |
| 220 | Anschlagabschnitt | | |
| 221 | Längsachse des Anschlagabschnitts | | |
| 222 | Hakenabschnitt | | |
| 223 | Drehachse des Teilbolzens | | |
| 224 | Verbindungsabschnitt | | |
| 225 | Öffnung | | |
| 226 | Teilbolzen | | |

### Drittes Ausführunasbeispiel:

- 300: Verriegelungselement, Verriegelungseinheit
- 302: Befestigungsabschnitt
- 304: Halteabschnitt
- 306: Verformungsweg
- 308: Eingrifftiefe
- 320: Auflageelement
- 330: Trageinrichtung
- 332: Tragelement
- 334: Schienensystem
- 336: untere Schiene
- 338: obere Schiene
- 342: Haltestange
- 344: Ende der Haltestange

**Viertes Ausführungsbeispiel:**

| | | | |
|---|---|---|---|
| 400 | Verriegelungseinheit | 452 | obere Schräge |
| 402 | Verriegelungselement | 454 | untere Schräge |
| 404 | Drehelement | 460 | abgewinkeltes Teilstück der |
| 406 | Lagerbereich | | Aufnahmestange |
| 408 | Lagerbolzen | | |
| 410 | Hakenarm | | |
| 412 | Haken | | |
| 414 | Anlaufschräge | | |
| 416 | Federarm | | |
| 418 | Betätigungsarm | | |
| 420 | Kontaktbereich | | |
| 422 | Schraubenfeder | | |
| 424 | oberer Anschlag | | |
| 426 | unterer Anschlag | | |
| 430 | Trageinrichtung | | |
| 432 | Tragelement | | |
| 434 | Schienensystem | | |
| 436 | untere Schiene | | |
| 438 | obere Schiene | | |
| 439 | abgewinkeltes Ende der oberen Schiene | | |
| 440 | Öffnung | | |
| 442 | Rand der Öffnung | | |
| 444 | vorderes Auflageelement | | |
| 446 | hinteres Auflageelement | | |
| 450 | Halteelement | | |

## Patentansprüche

1. Haushaltsgerät (2) oder Gewerbegerät zum Reinigen, Lagern oder Garen von Gegenständen, umfassend ein von Wandungen (4) gebildetes Gehäuse (6), mittels dessen ein Innenraum (8) räumlich eingefasst ist, sowie mindestens eine aus dem Innenraum (8) entnehmbare Trageinrichtung (130),
• wobei die Trageinrichtung (130) mindestens ein Schienensystem (134) mit mindestens zwei miteinander verbundenen, relativ zueinander beweglichen Schienen (136 und 138) sowie mindestens ein Tragelement (132) umfasst,
• wobei das Schienensystem (134) bei Vorliegen der Trageinrichtung (130) in einem Einbauzustand derart in Kraft übertragender Weise an dem Gehäuse (6) gelagert ist, dass das Tragelement (132) mittels Ausziehens des Schienensystems (134) relativ zu dem Gehäuse (6) bewegbar ist,
• wobei eine an der Trageinrichtung (130) angeordnete Verriegelungseinheit (100), die mindestens ein Verriegelungselement (110) umfasst, zwischen einem Blockierzustand und einem Freizustand überführbar ist,
• wobei die Verriegelungseinheit (100) bei Vorliegen der Trageinrichtung (130) in deren Ausbauzustand, in dem die Trageinrichtung (130) körperlich von dem Gehäuse (6) getrennt ist, in ihrem Blockierzustand vorliegt, bei dessen Vorliegen das Verriegelungselement (110) unter Bildung eines Formschlusses das Ausziehen des Schienensystems (134) blockiert, und
• wobei die Verriegelungseinheit (100) bei Vorliegen der Trageinrichtung (5) in deren Einbauzustand in ihrem Freizustand vorliegt, bei dessen Vorliegen das Verriegelungselement (102) das Ausziehen des Schienensystems (134) freigibt,
• und wobei die Verriegelungseinheit (100) zumindest ein zweites drehbar an der Trageinrichtung (130) angeordnetes Verriegelungselement (150) umfasst, wobei die Verriegelungselemente (110, 150) zumindest mittelbar verschiedenen Schienen (136, 138) des Schienensystems (134) zugeordnet sind,
**dadurch gekennzeichnet,**
**dass** der Blockierzustand der Verriegelungseinheit (100) mittels einer Mehrzahl von Blockierstellungen der Verriegelungselemente (110, 150), in denen diese jeweils unterschiedlich um ihre jeweilige Drehachse (112, 152) relativ zu der Trageinrichtung (130) verdreht sind, erreichbar ist, so dass die Verriegelungselemente (110, 150) bei Vorliegen der in ihrem Ausbauzustand befindlichen Trageinrichtung (130) in einer Nutzungsausrichtung, in der das Tragelement (132) zur Aufnahme eines Gegenstands vorgesehen ist, gemeinsam in einer ersten Blockierstellung und bei Vorliegen der in ihrem Ausbauzustand befindlichen Trageinrichtung (130) in einer Umkehrausrichtung, in der die Trageinrichtung (5) gegenüber der Nutzungsausrichtung um 180° gedreht ist, in einer zweiten Blockierstellung vorliegen, sodass die Verriegelungseinheit (100) bei Vorliegen der Trageinrichtung (130) sowohl in deren Nutzungsausrichtung als auch in deren Umkehrausrichtung jeweils in ihrem Blockierzustand vorliegt.

2. Haushaltsgerät (2) oder Gewerbegerät nach dem vorhergehenden Anspruch, **dadurch gekennzeichnet , dass** beide Verriegelungselemente (110, 150) jeweils um eine Drehachse (112, 152) drehbar an der Trageinrichtung (5) angeordnet sind, wobei vorzugsweise die Drehachsen (112, 152) der Verriegelungselemente (110, 150) parallel zueinander orientiert sind.

3. Haushaltsgerät (2) oder Gewerbegerät nach mindestens einem der vorhergehenden Ansprüche, **gekennzeichnet durch** mindestens eine Aufnahme (14), die in Kraft übertragender Weise an dem Gehäuse (6) angeordnet ist und dazu geeignet und ausgebildet ist, die Trageinrichtung (130) aufzunehmen, wobei vorzugsweise die Trageinrichtung (130) auf einer Auflagefläche der Aufnahme (14) ablegbar ist.

4. Haushaltsgerät (2) oder Gewerbegerät nach mindestens einem der vorhergehenden Ansprüche, **dadurch gekennzeichnet, dass** die Verriegelungseinheit (100) mittelbar oder unmittelbar einer Schiene (136, 138) des Schienensystems (134), vorzugsweise einer Unterschiene (136), zugeordnet ist.

5. Haushaltsgerät (2) oder Gewerbegerät nach mindestens einem der vorhergehenden Ansprüche, **dadurch gekennzeichnet, dass** das Tragelement (132) mittelbar oder unmittelbar in Kraft übertragender Weise einer Schiene (136, 138) des Schienensystems (134) zugeordnet ist, vorzugsweise einer Oberschiene (138).

## Claims

1. Domestic appliance (2) or commercial appliance for cleaning, storing or cooking items, comprising a housing (6) formed by walls (4), by means of which an interior (8) is spatially surrounded, and at least one support device (130) which is removable from the interior (8),
• the support device (130) comprising at least one rail system (134) having at least two rails (136 and 138) which are connected to one another and movable relative to one another, and at least one support element (132),
• when the support device (130) is present in an installed state, the rail system (134) being mounted on the housing (6) in a force-transmitting manner in such a way that the support element (132) is movable relative to the housing (6) by pulling out the rail system (134),
• it being possible to transfer a locking unit (100) arranged on the support device (130) and comprising at least one locking element (110) between a blocking state and a free state,
• when the support device (130) is present in its removed state, in which the support device (130) is physically separated from the housing (6), the locking unit (100) being present in its blocking state, in which by forming a form-fit the locking element (110) blocks the rail system (134) from being pulled out, and
• when the support device (5) is present in its installed state, the locking unit (100) being present in its free state, in which the locking element (102) allows the rail system (134) to be pulled out,
• and the locking unit (100) comprising at least one second locking element (150) which is rotatably arranged on the support device (130), the locking elements (110, 150) being assigned at least indirectly to different rails (136, 138) of the rail system (134),
**characterised in that**
the blocking state of the locking unit (100) is achievable by means of a plurality of blocking positions of the locking elements (110, 150), in which the elements are each rotated differently about their relevant axis of rotation (112, 152) relative to the support device (130), so that when the support device (130) in its removed state is in a usage orientation in which the support element (132) is provided for receiving an item, the locking elements (110, 150) are together in a first blocking position, and when the support device (130) in its removed state is in a reverse orientation in which the support device (5) is rotated by 180° relative to the usage orientation, the locking elements are in a second blocking position, so that when the support device (130) is both in its usage orientation and in its reverse orientation, the locking unit (100) is in its blocking state in each case.

2. Domestic appliance (2) or commercial appliance according to the preceding claim, **characterised in that** both locking elements (110, 150) are each arranged on the support device (5) such that they can be rotated about an axis of rotation (112, 152), the axes of rotation (112, 152) of the locking elements (110, 150) preferably being oriented in parallel with one another.

3. Domestic appliance (2) or commercial appliance according to at least one of the preceding claims, **characterised by** at least one receptacle (14) which is arranged in a force-transmitting manner on the housing (6) and is suitable and designed for receiving the support device (130), the support device (130) preferably being able to be placed on a bearing surface of the receptacle (14).

4. Domestic appliance (2) or commercial appliance according to at least one of the preceding claims, **characterised in that** the locking unit (100) is indirectly or directly assigned to a rail (136, 138) of the rail system (134), preferably a lower rail (136).

5. Domestic appliance (2) or commercial appliance according to at least one of the preceding claims, **characterised in that** the support element (132) is indirectly or directly assigned in a force-transmitting manner to a rail (136, 138) of the rail system (134), preferably an upper rail (138).

## Revendications

1. Appareil électroménager (2) ou appareil industriel permettant de nettoyer, de stocker ou de cuire des objets, comprenant un boîtier (6) formé de parois (4), au moyen duquel un espace intérieur (8) est spatialement clos, ainsi qu'au moins un dispositif de support (130) pouvant être retiré de l'espace intérieur (8),
• dans lequel le dispositif de support (130) comprend au moins un système de rails (134) comportant au moins deux rails (136 et 138) reliés l'un à l'autre et mobiles l'un par rapport à l'autre, ainsi qu'au moins un élément de support (132),
• dans lequel le système de rails (134), lorsque le dispositif de support (130) est présent, dans un état monté, est monté sur le boîtier (6) de manière à transmettre une force de telle sorte que l'élément de support (132) est mobile par rapport au boîtier (6) par déploiement du système de rails (134),
• dans lequel une unité de verrouillage (100) disposée sur le dispositif de support (130) et comprenant au moins un élément de verrouillage (110) peut être transférée entre un état de blocage et un état libre,
• dans lequel l'unité de verrouillage (100) est présente dans son état de blocage lorsque le dispositif de support (130) est présent dans son état démonté, dans lequel le dispositif de support (130) est physiquement séparé du boîtier (6), et lorsque le dispositif de support est présent, l'élément de verrouillage (110) bloque le déploiement du système de rails (134) en formant une complémentarité de forme, et
• dans lequel l'unité de verrouillage (100) est présente dans son état libre lorsque le dispositif de transport (5) est présent dans son état monté, et lorsqu'il est présent, l'élément de verrouillage (102) libère le déploiement du système de rails (134),
• et dans lequel l'unité de verrouillage (100) comprend au moins un second élément de verrouillage (150) disposé de manière rotative sur le dispositif de support (130), dans lequel les éléments de verrouillage (110, 150) sont affectés au moins indirectement à différents rails (136, 138) du système de rails (134),
**caractérisé en ce**
**que** l'état de blocage de l'unité de verrouillage (100) peut être obtenu au moyen d'une pluralité de positions de blocage des éléments de verrouillage (110, 150), dans lesquelles lesdits éléments de verrouillage sont respectivement tournés différemment autour de leur axe de rotation (112, 152) respectif par rapport au dispositif de support (130) de telle sorte que les éléments de verrouillage (110, 150) sont présents conjointement dans une première position de blocage lorsque le dispositif de support (130), se trouvant dans son état démonté, est présent dans une orientation d'utilisation dans laquelle l'élément de support (132) est fourni pour recevoir un objet, et les éléments de verrouillage sont présents dans une seconde position de blocage lorsque le dispositif de support (130), se trouvant dans son état démonté, est présent dans une orientation inverse dans laquelle le dispositif de support (5) est tourné de 180 ° par rapport à l'orientation d'utilisation de telle sorte que l'unité de verrouillage (100) est respectivement présente dans son état de blocage lorsque le dispositif de support (130) est présent à la fois dans son orientation d'utilisation et dans son orientation inverse.

2. Appareil électroménager (2) ou appareil industriel selon la revendication précédente, **caractérisé en ce que** les deux éléments de verrouillage (110, 150) sont respectivement disposés sur le dispositif de support (5) de manière à pouvoir tourner autour d'un axe de rotation (112, 152), dans lequel les axes de rotation (112, 152) des éléments de verrouillage (110, 150) sont de préférence orientés parallèlement les uns aux autres.

3. Appareil électroménager (2) ou appareil industriel selon au moins l'une quelconque des revendications précédentes, **caractérisé par** au moins un réceptacle (14) disposé sur le boîtier (6) de manière à transmettre une force et adapté et conçu pour recevoir le dispositif de support (130), dans lequel, de préférence le dispositif de support (130) peut être placé sur une surface d'appui du réceptacle (14).

4. Appareil électroménager (2) ou appareil industriel selon au moins l'une quelconque des revendications précédentes, **caractérisé en ce que** l'unité de verrouillage (100) est associée directement ou indirectement à un rail (136, 138) du système de rails (134), de préférence à un rail inférieur (136).

5. Appareil électroménager (2) ou appareil industriel selon au moins l'une quelconque des revendications précédentes, **caractérisé en ce que** l'élément de support (132) est associé directement ou indirectement de manière à transmettre une force à un rail (136, 138) du système de rails (134), de préférence à un rail supérieur (138).
